# EUROPEAN PATENT APPLICATION

(11) **EP 4 718 278 A1**
(43) Date of publication of application: **01.04.2026**
(21) Application number: 25204098.5
(22) Date of filing: 23.09.2025
(51) Int. Cl.: G06F 16/3329

(54) **MULTI-AGENT PROCESSING FRAMEWORK FOR AUTOMATED QUERY RESOLUTION**

(30) Priority: 25.09.2024 US 202463698878 P
(71) Applicant: ADP, Inc., Roseland, NJ 07068 (US)
(72) Inventor: JAIN, Ruchi Jinendra, Roseland, 07068 (US); SIMMS, Brian C., Roseland, 07068 (US); ROJAS, Gabriel, Roseland, 07068 (US); KHARA, Keval, Roseland, 07068 (US); SUBRAMANIAN, Pramodh Thurayamannil, Roseland, 07068 (US); DARAL, Kunal, Roseland, 07068 (US)
(74) Representative: Morrall, Jonathan Ian McLachlan

(57) **Abstract**

A system for automated query resolution using a multi-agent processing framework is described. The system includes one or more processors coupled with memory to generate, using one or more machine learning models and based on a query associated with an account, an embedding corresponding to a vector representation of the query. The system can perform, using the embedding, a vector semantic search in a vector space of a plurality of queries to identify documentation associated with the query and a matching question response pair. The system can identify, from a knowledge graph using the documentation and metadata, one or more entities related to the question response pair and one or more relationships between the entities. The system can select, from a plurality of agents, an agent to provide an interaction with the user to address the entities and relationships, and provide, via the processing framework, a response of the query response pair responsive to the interaction.

## Description

### CROSS-REFERENCE TO RELATED APPLICATIONS

This application claims the benefit of priority under 35 U.S.C. § 119 to U.S. Provisional Patent Application No. 63/698,878, filed September 25, 2024, which is hereby incorporated by reference herein in its entirety

### TECHNICAL FIELD

This application relates generally to computing technology and, in particular, to multi-agent machine learning (ML) based processing frameworks for automated query resolution

### BACKGROUND

Online computing services can resolve diverse user queries based on various documentation and data. However, due to the large number of varying constraints, accurate and reliable automated processing of such queries can be challenging.

### SUMMARY

Aspects of the technical solutions described herein are directed to a multi-agent processing framework for automated query resolution. Systems providing automated query resolution in enterprise computing environments can process large volumes of heterogeneous documentation and structured data to address user requests originating from disparate domains. Computing systems can use rule-based approaches, keyword matching, or static lookup tables to map user queries to relevant information. Such approaches can encounter limitations when queries are ambiguous, phrased in natural language, or rely on contextual understanding based on user-specific metadata, such as a location, status, or role of a user in the context of a specific query. Machine learning models can be used to generate responses to user queries, but such systems can produce inaccurate or unreliable answers due to phenomena such as hallucinations or data drift in the models. Such issues can be exacerbated when underlying documentation or enterprise policies are subject to frequent updates or when queries depend on context. The lack of integration between verified knowledge sources and automated response generation can result in responses that lack accuracy or context.

The technical solutions described herein can use a multi-agent processing framework to address the technical challenges associated with automated query resolution in enterprise environments, thereby improving the accuracy and reliability of the responses generated by the computing system. The technical solutions described herein can generate, based on a user query and associated metadata, an embedding using one or more machine learning models. The embedding can be used to perform a vector semantic search in a vector space generated by the machine learning models, such that documentation and a matching question response pair can be identified. A knowledge graph can be used to identify entities and relationships associated with the query, based on the documentation and metadata. The knowledge graph can define relationships between entities associated with queries and their associated responses, such that intent detection and disambiguation can be performed. A router function can select an agent from a plurality of agents, such as a question and answer agent, a guided conversational agent, a system of record query agent, or a smart actions agent, based on the identified entities and relationships. The selected agent can provide an interaction with the user and deliver a response to the query, such that the response is contextually relevant and based on verified knowledge sources.

At least one aspect relates to a system. The system can include one or more processors coupled with memory. The system can generate, using one or more machine learning models and based on a query associated with an account of a processing framework, an embedding corresponding to a vector representation of the query. The system can perform, using the embedding, a vector semantic search in a vector space of a plurality of queries to identify documentation associated with the query and a matching question response pair, the vector space generated using the one or more machine learning models. The system can identify, from a knowledge graph using the one or more machine learning models, using the documentation and metadata associated with the account, one or more entities related to the question response pair and one or more relationships between the one or more entities. The knowledge graph can define relationships between entities associated with the queries and the associated responses. The system can select, from a plurality of agents of the processing framework, based on the one or more entities and the one or more relations, an agent to provide an interaction with the user to address the one or more entities and the one or more relationships for the question response pair. The system can provide, via the processing framework, a response to/associated with the query response pair responsive to the interaction.

The system can identify the matching question response pair based on a vector semantic search between the embedding and a vector of a question of the matching question response pair, satisfying a similarity threshold. The system can identify, based on the vector semantic search, a plurality of question response pairs corresponding to the embedding. The system can identify, using the knowledge graph, the one or more entities corresponding to one or more follow up questions to distinguish between the plurality of question response pairs. The system can receive, via an agent of the plurality of agents, one or more follow up responses to the one or more follow up questions. The system can identify, from the plurality of question response pairs based on the one or more follow up responses, the matching question response pair.

The system can select, from the plurality of agents, a question and answer agent configured to process user queries based on the matched question response pair. The system can determine, by the question and answer agent, that the matched question response pair does not satisfy a similarity threshold in the vector space. In response to the determination, the system can provide, from the knowledge graph, alternative relevant information or more policy documents based on the metadata.

The system can select, from the plurality of agents, a guided conversational agent configured to generate one or more follow up questions based on the one or more entities. The system can receive, responsive to the one or more follow up questions, one or more responses defining the one or more entities. The system can provide the response, responsive to the one or more responses. The system can select, from the plurality of agents, a system of record query agent configured to access a knowledge graph with function calls to metadata to retrieve structured data corresponding to the one or more entities. The system can generate the response(s) to queries based on the structured data.

The structured data comprises one or more of confidential information associated with the account or confidential information associated with an enterprise corresponding to the account. The system can select, from the plurality of agents, a smart actions agent configured to identify a guided workflow of actions corresponding to the one or more entities. The system can implement one or more actions of the guided workflow to identify information to resolve the one or more entities, such as, for example, identifying the one or more entities. The system can provide the response based on the information.

At least one other aspect relates to a method. The method can be performed, for example, by one or more processors coupled to non-transitory memory. The method can include generating, using one or more machine learning models, and based on a query associated with an account of a processing framework, an embedding corresponding to a vector representation of the query. The method can include performing, using the embedding, a vector semantic search in a vector space of a plurality of queries to identify documentation associated with the query and a matching question response pair, the vector space generated using the one or more large language models. The method can include identifying, from a knowledge graph using the one or more machine learning models, using the documentation and metadata associated with the account, one or more entities related to the question response pair and one or more relationships between the one or more entities, wherein the knowledge graph defines relationships between entities associated with the queries and the associated responses. The method can include selecting, from a plurality of agents of the processing framework, based on the one or more entities and the one or more relations, an agent to provide an interaction with the user to address the one or more entities and the one or more relationships for the question response pair. The method can include providing, via the processing framework to the user, a response to the query response pair responsive to the interaction.

The method can include the one or more processors determining, based on at least one of the embedding or the one or more entities identified in the knowledge graph, that the query is ambiguous. The method can include the one or more processors generating, via the selected agent, one or more follow-up questions to the client device in response to the determination that the query is ambiguous. The method can include the one or more processors receiving, via the selected agent, one or more follow-up responses to the one or more follow-up questions. The method can include identifying, by the one or more processors, based on the one or more follow-up responses and using the knowledge graph, a refined matching question response pair from the plurality of question response pairs. The method can include providing, by the one or more processors, to the client device via the processing framework, the response to the query response pair comprising the refined matching question response pair. The method can include the one or more processors identifying the matching question response pair based on a vector semantic search between the embedding and a vector of a question of the matching question response pair satisfying a similarity threshold.

The method can include the one or more processors identifying, based on the vector semantic search, a plurality of question response pairs corresponding to the embedding. The method can include the one or more processors identifying, using the knowledge graph, the one or more entities corresponding to one or more follow up questions to distinguish between the plurality of question response pairs. The method can include the one or more processors receiving, via an agent of the plurality of agents, one or more follow up responses to the one or more follow up questions. The method can include identifying, by the one or more processors, from the plurality of question response pairs based on the one or more follow up responses, the matching question response pair.

The method can include the one or more processors selecting, from the plurality of agents, a question and answer agent configured to process client device queries related to the matched question response pair. The method can include determining, by the question and answer agent, that the matched question response pair does not satisfy a similarity threshold in the vector space. The method can include providing, by the one or more processors, from the knowledge graph, an alternative relevant information, or one or more policy documents, in response to determining that the matched question response pair does not satisfy the similarity threshold and based on the metadata.

The method can include the one or more processors selecting, from the plurality of agents, a guided conversational agent configured to generate one or more follow up questions based on the one or more entities. The method can include receiving, by the one or more processors, via the guided conversational agent, responsive to the one or more follow up questions, one or more responses define the one or more entities. The method can include providing, by the one or more processors, the response, responsive to the one or more responses.

The method can include the one or more processors selecting, from the plurality of agents, a system of record (SOR) query agent configured to access a knowledge graph with function calls to metadata to retrieve structured data corresponding to the one or more entities. The method can include generating, by the one or more processors, using the SOR query agent, the response of queries based on the structured data. The structured data can include one or more of confidential information associated with the account or confidential information associated with an enterprise corresponding to the account.

The method can include the one or more processors selecting, from the plurality of agents, a smart actions agent configured to identify a guided workflow of actions corresponding to the one or more entities. The method can include the one or more processors implementing one or more actions of the guided workflow to identify information to resolve the one or more entities. The method can include the one or more processors providing the response based on the information.

The method can include the one or more processors determining a plurality of similarity scores between the embedding and a plurality of candidate question embeddings. The method can include the one or more processors calculating a relative similarity threshold based on a distribution of the similarity scores. The method can include the one or more processors identifying the matching question response pair by comparing the similarity scores to the relative similarity threshold.

The method can include the one or more processors identifying a workflow of one or more queries comprising the query addressed via the agent. The method can include the one or more processors detecting a change in query context based on a second query. The method can include the one or more processors identifying, in response to detecting the change in the query context, a second agent of the plurality of agents for the second query. The method can include the one or more processors resuming, upon completion of processing of the second query by the second agent, the workflow. The one or more processors can reference, in the response provided to the client device, a citation to a section of a document from the set of documentation used to generate the matching question response pair.

At least one other aspect relates to a non-transitory computer readable medium. The non-transitory computer readable medium can store program instructions for causing at least one processor to generate, using one or more machine learning models and based on a query associated with an account of a processing framework, an embedding corresponding to a vector representation of the query. The instructions, when executed by the at least one processor, can cause the at least one processor to perform, using the embedding, a vector semantic search in a vector space of a plurality of queries to identify documentation associated with the query and a matching question response pair, the vector space generated using the one or more machine learning models. The instructions, when executed by the at least one processor, can cause the at least one processor to identify, from a knowledge graph using the one or more machine learning models, using the documentation and metadata associated with the account, one or more entities related to the question response pair, and one or more relationships between the one or more entities. The knowledge graph can define relationships between entities associated with the queries and the associated responses. The instructions, when executed by the at least one processor, can cause the at least one processor to select, from a plurality of agents of the processing framework, based on the one or more entities and the one or more relations, an agent to provide an interaction with the user to address the one or more entities and the one or more relationships for the question response pair. The instructions, when executed by the at least one processor, can cause the at least one processor to provide, via the processing framework, a response to the query response pair responsive to the interaction.

These and other aspects and implementations are discussed in detail below. The foregoing information and the following detailed description include illustrative examples of various aspects and implementations and provide an overview or framework for understanding the nature and character of the claimed aspects and implementations. The drawings provide illustration and a further understanding of the various aspects and implementations, and are incorporated in and constitute a part of this specification. Aspects can be combined, and it will be readily appreciated that features described in the context of one aspect of the invention can be combined with other aspects. Aspects can be implemented in any convenient form, for example, by appropriate computer programs, which may be carried on appropriate carrier media (computer readable media), which may be tangible carrier media (e.g., disks) or intangible carrier media (e.g., communications signals). Aspects may also be implemented using any suitable apparatus, which may take the form of programmable computers running computer programs arranged to implement the aspect. As used in the specification and in the claims, the singular form of 'a,' 'an,' and 'the' include plural referents unless the context clearly dictates otherwise.

### BRIEF DESCRIPTION OF THE DRAWINGS

The accompanying drawings are not intended to be drawn to scale. Like reference numbers and designations in the various drawings indicate like elements. For purposes of clarity, not every component may be labeled in every drawing. In the drawings:
FIG. 1 is a block diagram of an example system for providing a multi-agent processing framework for automated query resolution, in accordance with one or more implementations;
FIG. 2 is a block diagram of an example system with a data ingestion module for generating and managing frequently asked questions, embeddings, and ontologies from various documents in a multi-agent processing framework, in accordance with one or more implementations;
FIG. 3 is a block diagram of an example system with an intent module for processing user queries in a multi-agent automated query resolution framework, in accordance with one or more implementations;
FIG. 4 is a block diagram of an example system utilizing router and agent functionalities for automated query resolution in a multi-agent processing framework, in accordance with one or more implementations;
FIG. 5 is an example screenshot of a user interface for managing and publishing question and answer pairs for company policies, in accordance with one or more implementations;
FIG. 6 is an example screenshot of a user interface for managing the publication of question and answer pairs for company policies and guidelines, in accordance with one or more implementations;
FIG. 7 is an example screenshot of a user interface view for managing and publishing question and answer pairs for company policies and guidelines within a knowledge management system, in accordance with one or more implementations;
FIG. 8 is an example screenshot of a user interface view illustrating a knowledge management dashboard for reviewing, editing, and managing the publication of question and answer pairs for company policies and guidelines, in accordance with one or more implementations;
FIG. 9 is a block diagram illustrating an example architecture of a computing system for implementing the multi-agent processing framework, in accordance with one or more implementations;
FIG. 10 shows an exemplary cloud computing environment in accordance with aspects of the technical solutions, in accordance with one or more implementations; and
FIG. 11 is a flow chart illustrating a method for automated query resolution using a multi-agent processing framework, in accordance with one or more implementations.

### DETAILED DESCRIPTION

Below are detailed descriptions of various concepts related to, and approaches, methods, apparatuses, and systems for implementing the various techniques described herein. The various concepts introduced above and discussed in greater detail below may be implemented in any of numerous ways, as the described concepts are not limited to any particular manner of implementation. Examples of specific implementations and applications are provided primarily for illustrative purposes.

Computing systems can be used to process large volumes of information in enterprise environments. Such environments can include documentation, structured data, and user requests that originate from a variety of sources. Machine learning models can be deployed within these systems to support automated query resolution. The use of multiple processing agents, knowledge bases, and user interfaces can provide a framework for responding to user queries. The architecture of such systems can include client devices, data processing systems, storage components, and various modules for managing information flow.

Automated query resolution can face technical challenges when processing queries that are ambiguous, context-dependent, or expressed in natural language, where specific terms utilized by users may impact the contextual determinations of the system. In such instances, rule-based methods, keyword matching, and static lookup tables can be limited in their ability to interpret user intent. This can, in turn, lead the machine learning models to generate responses that lack accuracy due to phenomena such as hallucinations or data drift. For instance, absence of integration between verified knowledge sources and automated response generation can result in responses that do not reflect current documentation or user context. Frequent updates to enterprise policies and the need to incorporate user-specific metadata can further complicate the reliability of automated query systems.

The techniques described herein can address these challenges by providing a multi-agent processing framework for automated query resolution. The framework can use one or more machine learning models to generate an embedding based on a user query and associated metadata. The embedding can be used to perform a vector semantic search within a vector space generated by the machine learning models. The system can identify documentation and a matching question response pair by comparing the embedding to vectors associated with pre-verified question and answer pairs. A knowledge graph can be used to identify entities and relationships relevant to the query based on entity and relationship data that can be curated or validated according to validation status. The knowledge graph can define relationships between entities and responses, such that intent detection and disambiguation can be performed more accurately and with reduced chances of hallucinations or data drift. A router function can select an agent from a plurality of agents based on the identified entities and relationships, and the system utilizes the selected agent to manage or provide the interaction with the user and deliver a response to the requesting client device that is contextually relevant and based on verified knowledge sources.

The implementation of the techniques described herein can involve several components or features. For instance, a client device can transmit a query to a data processing system, while the data processing system can utilize a machine learning framework to generate an embedding of the query. The embedding can be compared to a set of vectors representing validated, curated, or pre-verified question and answer pairs stored in a vector space. The system can use a knowledge graph to identify entities and relationships associated with the query, based on documentation and metadata. An intent detection engine can analyze the query and the associated embedding to determine user intent. The technical solutions can select an agent from a plurality of agents, such as a question and answer agent, a guided conversational agent, a system of record query agent, or a smart actions agent. The selected agent can interact with the user to address the identified entities and relationships and provide a response in a manner that reduces the hallucination or data drifting opportunities, delivering the response to the requesting client device via the framework.

The techniques described herein can provide technical improvements over existing approaches to automated query resolution. By using validated, curated, or pre-verified question and answer pairs and knowledge graphs, the system can reduce the occurrence of inaccurate responses (e.g., hallucinations or data drifts) generated by machine learning models. The integration of user metadata and documentation updates can allow the framework to generate responses that reflect current policies and user context. The use of a multi-agent architecture can support disambiguation and intent detection, such that user queries are addressed with greater accuracy and reliability. The techniques described herein can improve the efficiency and reliability of automated query resolution in enterprise computing environments.

By virtue of the implementation of the techniques described herein, a system configured for multi-agent processing framework for automated query resolution can reduce processor and memory consumption during query handling. For example, the system can generate an embedding using one or more machine learning models based on a query, perform a vector semantic search in a vector space of queries, and identify relevant documentation and a matching question response pair without exhaustively parsing all available data or executing resource-intensive operations for each incoming query. By leveraging compact vector representations and targeted semantic searches, the system can minimize the computational overhead associated with traditional rule-based or keyword-matching approaches that often require loading and scanning large datasets in memory. As a result, processor cycles and memory allocations can be conserved, allowing the system to efficiently process user queries at scale.

Moreover, the system can reduce network communication by minimizing the amount of data exchanged between components during automated query resolution. For example, the system can identify, from a knowledge graph using the one or more machine learning models, entities and relationships relevant to the query and select an agent from a plurality of agents based on this contextual information, rather than transmitting entire documents or large datasets across the network for each query. By focusing on transmitting only the necessary embeddings, entity relationships, and targeted agent selection information, the system can avoid redundant or excessive data transfers that are common in less optimized architectures. As a result, network bandwidth utilization can be decreased, supporting faster response times and improved scalability in distributed or cloud-based deployments.

In at least some examples, the system can improve accuracy in automated query resolution by integrating verified knowledge sources and context-aware agent selection. For example, the system can use a knowledge graph to define relationships between entities associated with queries and responses, and select an agent to provide an interaction with the user that addresses the specific entities and relationships relevant to the query. By leveraging pre-verified question response pairs and dynamically routing queries to specialized agents based on semantic understanding, the system can reduce the likelihood of inaccurate or hallucinated responses that are often produced by conventional machine learning models operating in isolation. As a result, the system can deliver more reliable, contextually relevant answers to user queries, enhancing the overall accuracy of automated query resolution.

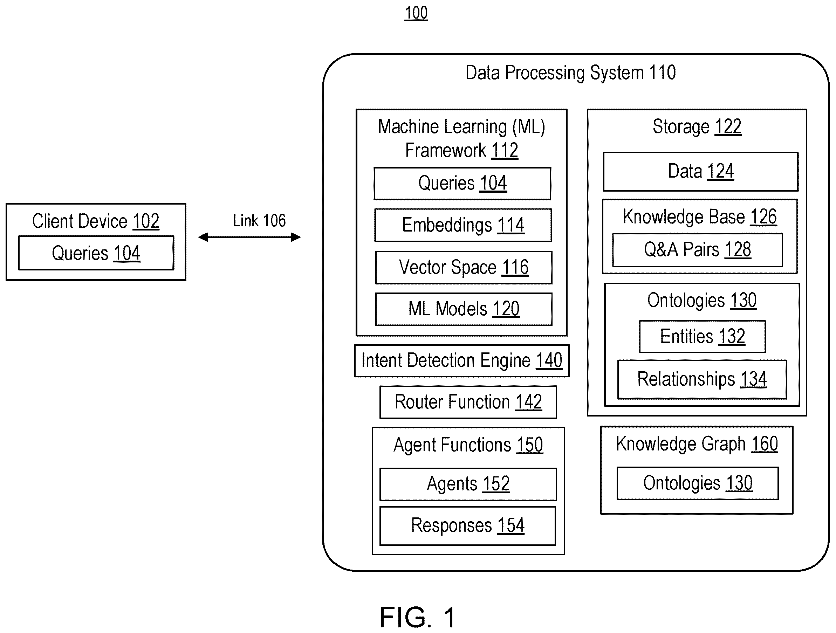

FIG. 1 illustrates a block diagram of an example system 100 for providing a multi-agent processing framework for automated query resolution. The system 100 can include a client device 102 communicating with a data processing system 110 via one or more links 106. For instance, the client device 102 can generate and transmit one or more queries 104 to the data processing system 110 via a link 106, and the data processing system 110 can utilize its functionalities to generate and provide responses 154 to client device queries 104. The data processing system 110 can include or operate one or more machine learning (ML) frameworks 112, which can include queries 104, embeddings 114, a vector space 116, and ML models 120. The data processing system 110 can further include or operate one or more of storage 122, which can store and provide access to data 124, as well as one or more knowledge bases 126 that can include or reference question and answer (Q&A) pairs 128. The storage 122 can store and provide access to one or more ontologies 130 that can include, reference, or otherwise relate any number of entities 132 (e.g., an employee record or a profile, a retirement account, a leave request, company benefit data, or data on an event) as well as relationships 134 between such entities 132.

The data processing system 110 can also include an intent detection engine 140 for determining an intent of a received query 104 or a follow-up question from a client device 102 and a router function 142 for directing the query 104 or follow-up question to an agent 152 of the agent functions 150 based on the determined intent. The data processing system 110 can include one or more agent functions 150 for invoking agents 152 to process queries and generate responses 154. The data processing system 110 can include a knowledge graph 160, which can store ontologies 130, where the knowledge graph 160 can represent structured relationships between entities 132 and relationships 134 defined within the ontologies 130, and can be used by the data processing system 110 to provide context, disambiguation, or entity mapping during query resolution.

Example system 100 can include a client device 102 communicating one or more queries 104, via a link 106, to a data processing system 110. The data processing system 110 can include one or more machine learning (ML) frameworks 112 to provide ML functionalities of the data processing system solutions. An ML framework 112 can include or receive one or more queries 104 and generate or provide one or more of their corresponding embeddings 114. The ML framework 112 can generate, operate or maintain a vector space 116 with the knowledge base 126 that can include any number of Q&A pairs 128. The ML framework 112 can include one or more ML models 120 for implementing the AI or ML functionalities of the solutions, including for example, LLMs, transformer models, recurrent neural networks (RNNs), convolutional neural networks (CNNs) for text understanding, decision trees, support vector machines (SVMs), random forests, k-nearest neighbors (KNNs), Bayesian networks or reinforcement learning models. The data processing system 110 can include one or more intent detection engines 140 for analyzing queries 104 or follow-up questions and identifying the underlying intent or goal behind the query 104, in order to map the query 104 to predefined entities 132. The router functions 142 can be provided for interpreting or clarifying the user's intent, as detected by an intent detection engine 140, and directing the query to the appropriate agents 152. The agent functions 150 can include various agents 152, such as the Q&A agent, the guided conversational agent, the system of record (SOR) query agent, or the smart actions agent, each of which can be used based on the nature or context of the query 104 and the user's metadata, to allow for a more efficient handling and accurate generation of the responses 154. For example, a guided workflow agent can resolve one or more entities based on one or more reply queries from client device to one or more follow-up questions from the workflow agent inquiring further information to clarify the user intent. Additional information from the follow up responses from the client device can be used to resolve one or more entities to utilize for the response. The one or more storages 122 can store data 124 (e.g., documentation, metadata of the user, or any other information), knowledge base 126 that can include Q&A pairs 128 and ontologies 130 identifying entities 132 for various response generation and their corresponding relationships 134. The knowledge graphs 160 can be based on the generated ontologies 130 and defining individual entities 132 and their relationships 134 to be used by the intent detection engine 140, router function 142, or the agents functions 150 during the course of response generation.

The system 100 can include a client device 102. The client device 102 can be any computing device that transmits queries to the data processing system 110. For example, the client device 102 can be a desktop computer, a laptop, a tablet, or a mobile device operated by an employee or a human resources (HR) practitioner. The client device 102 can generate one or more queries 104. The client device 102 can transmit the one or more queries 104 to the data processing system 110 via a link 106. For example, the client device 102 can submit a query 104 inquiring about the state or balance of a retirement account, a number of available vacation days, or availability of personal leave or parental time off, which can be sent to the data processing system 110 for automated resolution. The client device 102 can use a graphical user interface that can be displayed on the client device 102 to draft, prepare, or enter the one or more queries 104 and to receive and display responses 154 received from the data processing system 110. For example, the client device 102 can display a chat interface for submitting HR-related questions and for receiving answers generated by the data processing system.

The client device 102 can generate one or more queries 104 to be responded to by a data processing system 110. The queries 104 can be natural language requests, or questions submitted by a user for automated resolution. For example, the queries 104 can include requests for policy information, benefit balances, or workflow actions. The queries 104 can be received by the data processing system 110 for further processing. For example, a query 104 such as "How do I apply for maternity leave?" can be processed by the data processing system 110 to identify relevant documentation or actions. The queries 104 can be transmitted over a network or a direct communication link 106. For example, the client device 102 can use an application programming interface (API) or a web interface to transmit the queries 104 to the data processing system 110.

The system 100 can include a link 106. The link 106 can be a communication channel configured to transmit data between the client device 102 and the data processing system 110. The link 106 can include a wired network connection or a wireless network connection. For example, the link 106 can include Ethernet, Wi-Fi, or the Internet. The link 106 can transmit queries 104 from the client device 102 to the data processing system 110. The link 106 can transmit responses 154 from the data processing system 110 to the client device 102. The link 106 can provide bidirectional communication between the client device 102 and the data processing system 110 such that conversational interactions can be established. The link 106 can use secure protocols to protect transmitted data. For example, the link 106 can use HTTPS or another encrypted protocol to provide data privacy during transmission between the client device 102 and the data processing system 110.

The system 100 can include a data processing system 110 for providing automated responses to client device queries. For instance, the data processing system 110 can be one or more computing devices that can perform automated query resolution using machine learning techniques or knowledge-based techniques. The data processing system 110 can be a server, a cloud platform, or a distributed computing environment. The data processing system 110 can receive queries 104. The data processing system 110 can generate embeddings 114. The data processing system 110 can perform a semantic search. The data processing system 110 can detect intent. The data processing system 110 can select agents 152 to generate responses 154. For example, the data processing system 110 can process a query by generating an embedding, searching a vector space, or using a knowledge graph 160 to select an agent for response generation. The data processing system 110 can store data or retrieve data from storage 122 or the knowledge graph 160. For example, the data processing system 110 can access Q&A pairs 128 or ontologies 130 during query processing.

The data processing system 110 can include a machine learning framework 112. The machine learning framework 112 can include a set of components for executing machine learning models and related operations. The machine learning framework 112 can include libraries, application programming interfaces, or services for generating embeddings and performing semantic search. The machine learning framework 112 can generate embeddings 114 from queries 104. The embeddings 114 can include any numerical, vector-based, or mathematical representation of a query 104 generated by the machine learning framework 112, such as a vector of real numbers, a tensor, or another data structure that encodes semantic, syntactic, or contextual information derived from the query 104. The machine learning framework 112 can maintain a vector space 116. The vector space 116 can include any data structure or representation that stores embeddings 114 of queries 104 or question and answer pairs 128 generated by the machine learning framework 112. The machine learning framework 112 can execute machine learning models 120. For example, the machine learning framework 112 can use transformer models or large language models to convert queries 104 into vector representations. The machine learning framework 112 can interact with other components, such as the intent detection engine 140 or storage 122. For example, the machine learning framework 112 can retrieve question and answer pairs 128 from storage 122 for semantic search.

The machine learning framework 112 can generate one or more embeddings 114 for incoming queries 104. The embeddings 114 can be vector representations of queries 104 generated by one or more machine learning models 120. For instance, an embedding 114 can represent the semantic meaning of a user query in a high-dimensional vector space, such as a space for vectors having ten or more dimensions, each dimension corresponding to a latent feature related to a query (e.g., user date of hire, amount of vacation days accumulated, or other metadata). The embeddings 114 can be used to perform a semantic search in the vector space 116 to identify one or more relevant question and answer pairs 128. For example, the machine learning framework 112 can compare the embedding 114 of an incoming query 104 to one or more embeddings of stored questions to identify the closest match. The embeddings 114 can be generated using one or more machine learning models 120, such as large language models or transformer models. The machine learning framework 112 can use a pre-trained language model to compute the embedding 114 for each query 104.

The machine learning framework 112 can include, operate, or use a vector space 116. The vector space 116 can be a data structure that stores embeddings 114 of queries 104 or question and answer pairs 128. The vector space 116 can be implemented as a database or as an in-memory index that provides efficient similarity search. The vector space 116 can be used to perform semantic search by comparing the embedding 114 of an incoming query 104 to embeddings 114 that are stored in the vector space 116. For example, the machine learning framework 112 can use cosine similarity or another similarity metric to identify a question and answer pair 128 in the vector space 116 that is most similar to the embedding 114 of the incoming query 104. The vector space 116 can be updated as new question and answer pairs 128 are added or as existing question and answer pairs 128 are modified. For example, human resources (HR) practitioners of an entity whose documents are utilized can curate, verify, and publish new question and answer pairs 128, and the machine learning framework 112 can generate embeddings 114 for the new question and answer pairs 128 and add the embeddings 114 to the vector space 116.

Machine learning framework 112 can utilize a relative similarity threshold for identifying matching question response pairs. A relative similarity threshold can refer to a dynamically determined value that can be calculated based on a distribution of similarity scores between an embedding generated for an incoming query and a plurality of candidate question embeddings stored in a vector space. The relative similarity threshold can serve as a criterion for distinguishing between candidate question response pairs that are semantically relevant to the query and those that are not. For instance, the relative similarity threshold can be determined by evaluating statistical properties of the similarity scores, such as a mean, median, standard deviation, or a quantile, among others, and can be set to adapt to variations in the distribution of similarity scores across different queries or data sets. The relative similarity threshold can enable machine learning framework 112 to compare each similarity score to the threshold and identify a candidate question response pair as a matching question response pair when the similarity score meets or exceeds the threshold. The machine learning framework 112 can use the relative similarity threshold to dynamically adjust the criteria for semantic matching in response to changes in the underlying data or query characteristics, thereby improving the accuracy and reliability of automated query resolution.

The machine learning framework 112 can include one or more machine learning models 120. The machine learning models 120 can be machine learning models or artificial intelligence models that can process queries and generate embeddings. For example, the machine learning models 120 can include large language models, transformer models, or neural networks. The machine learning models 120 can generate embeddings 114. The machine learning models 120 can perform semantic search. The machine learning models 120 can provide for intent detection and agent selection. For instance, a large language model can generate an embedding 114 for a query 104. For instance, another machine learning model 120 can classify the intent of a query 104. The machine learning models 120 can be trained on enterprise documentation, question and answer pairs 128, or user queries 104. The machine learning models 120 can be retrained periodically to reflect updates in company policies or user behavior.

The data processing system 110 can include, use, or provide a storage 122. The storage 122 can be a hardware-based or cloud-based storage system configured for persisting data, a knowledge base, ontologies, entities, or relationships. For example, the storage 122 can include one or more databases, file systems, or object stores. The storage 122 can store data 124, a knowledge base 126, question and answer pairs 128, ontologies 130, entities 132, or relationships 134 for use by other components of the data processing system 110. For example, the storage 122 can persistently store curated question and answer pairs 128 or ontologies 130 generated by human resources practitioners. The storage 122 can be accessed by the machine learning framework 112, the intent detection engine 140, or the agent functions 150. For example, the intent detection engine 140 can retrieve ontologies 130 from the storage 122 to support disambiguation.

The storage 122 can store or provide access to data 124. The data 124 can include any information relevant to query resolution. The data 124 can include user metadata, documentation, or structured records. For example, the data 124 can include user profiles, policy documents, or historical queries. The data 124 can be used to provide context for query processing or agent selection. For example, user metadata such as a location or a role can influence which agent 152 is selected for a query. The data 124 can be updated as new information becomes available or as user interactions occur. For example, session context can be stored in the data 124 to provide for context switching during ongoing conversations.

The storage 122 can include a knowledge base 126. The knowledge base 126 can be a repository that stores curated question and answer pairs 128 for automated query resolution. The knowledge base 126 can include verified answers to human resources questions or other queries relevant to an enterprise environment. The knowledge base 126 can be used by the data processing system 110 to match queries 104 to relevant responses using a semantic search in the vector space 116. The data processing system 110 can identify the most relevant question and answer pair 128 for a given query 104 and return the corresponding answer to the client device 102. The knowledge base 126 can be curated and updated by human resources practitioners using a dashboard interface. New question and answer pairs 128 can be added to the knowledge base 126 as new policies are introduced or existing policies are updated. The knowledge base 126 can be structured to allow efficient retrieval and maintenance of question and answer pairs 128 for use in automated query resolution.

The knowledge base 126 can include question and answer pairs 128, which can also be referred to as the Q&A pairs 128. The Q&A pairs 128 can be pre-verified question and answer pairs used for automated response generation. For example, Q&A pairs 128 can address topics such as benefits, payroll, or leave policies. The Q&A pairs 128 can be embedded into the vector space 116 for semantic search and retrieval. For example, each Q&A pair 128 can be represented as a vector for efficient similarity matching with incoming queries. The Q&A pairs 128 can be reviewed and published by HR practitioners to maintain accuracy and relevance. For example, outdated Q&A pairs 128 can be archived or updated as company policies change.

The knowledge graph 160 can include functionalities for validation or verification of the Q&A pairs 128 using the machine learning framework 112. The data processing system 110 can automatically validate each Q&A pair 128 by comparing the content of the Q&A pair 128 to documentation or metadata stored in the storage 122. For instance, the data processing system 110 can use one or more machine learning models 120 to analyze the semantic similarity between the Q&A pair 128 and relevant sections of documentation or policy documents. The data processing system 110 can generate a validation status for each Q&A pair 128, such as validated or not validated, based on whether the content of the Q&A pair 128 matches the information extracted from the documentation or metadata. For instance, the data processing system 110 can update the validation status of the Q&A pair 128 in response to changes in the underlying documentation or metadata. For example, the data processing system 110 can flag Q&A pairs 128 with a not validated status for review by a human resources practitioner or other authorized user. The data processing system 110 can store the validation status in association with each Q&A pair 128 in the knowledge base 126 or the knowledge graph 160, such that the validation status can be referenced during query resolution or knowledge base curation.

The storage 122 can include ontologies 130. The ontologies 130 can be structured representations of entities 132 or relationships 134 that are relevant to query resolution. For example, the ontologies 130 can define one or more concepts such as employee, benefit, or policy, or can define interrelations among such concepts. The ontologies 130 can be used to populate the knowledge graph 160. The ontologies 130 can be used for intent detection or disambiguation. For example, the ontologies 130 can be used by the data processing system 110 to clarify ambiguous queries by identifying one or more relevant entities 132. The ontologies 130 can be generated automatically from documents. The ontologies 130 can be curated by HR practitioners. For example, new ontologies 130 can be created when a new policy document is ingested by the data ingestion module 205.

The ontologies 130 can include, reference, or relate to entities 132. The entities 132 can be discrete items or concepts defined within the ontology 130 for use in query processing. The entities 132 can include employee, department, benefit, or leave type. The entities 132 can be used to identify the subject of a query and guide agent selection. For example, a query about "401k" can be associated with entities 132, such as policy or balance. The entities 132 can be extracted from documents or user queries using the machine learning models 120. The system can use natural language processing techniques to identify the entities 132 in a user query.

The ontologies 130 can include relationships 134. The relationships 134 can define connections between entities 132 in the ontology. For example, relationships 134 can indicate that an employee has a benefit or that a policy applies to a department. The relationships 134 can be used for intent detection, disambiguation, or workflow generation. For example, the data processing system 110 can use relationships 134 to determine which agent 152 can respond to a query about a specific benefit. The relationships 134 can be stored in the knowledge graph 160 for retrieval or reasoning. For example, the data processing system 110 can traverse relationships 134 in the knowledge graph 160 to answer multi-step queries.

The data processing system 110 can include an intent detection engine 140. The intent detection engine 140 can be a component for determining the intent of incoming queries 104. The intent detection engine 140 can classify a query as a request for information, an action, or a workflow initiation. The intent detection engine 140 can use embeddings 114, the knowledge graph 160, or the machine learning models 120 to detect intent or to perform disambiguation. The intent detection engine 140 can use a graph-based retrieval-augmented generation ("GraphRAG") approach to combine semantic reasoning and graph-based reasoning. GraphRag can refer to or include an approach within the intent detection engine that combines semantic reasoning (via vector embeddings and semantic search) with graph-based reasoning using a knowledge graph, allowing the system to accurately detect user intent and provide context-aware, disambiguated responses by leveraging both pre-verified question-answer pairs and structured entity-relationship data from documentation and metadata. This integration can allow the automated query resolution to be both reliable and contextually relevant, reducing hallucinations and improving accuracy in enterprise environments. The intent detection engine 140 can generate one or more follow-up questions when a query is ambiguous. For example, the intent detection engine 140 can prompt a user to clarify whether a query referencing "401k" refers to a policy or a balance.

The data processing system 110 can include a router function 142. The router function 142 can be a component for directing queries to the appropriate agent 152 based on detected intent and entities. The router function 142 can receive outputs from the intent detection engine 140 and the knowledge graph 160. The router function 142 can use the outputs from the intent detection engine 140 and the knowledge graph 160 to determine which agent 152 is to process a given query. The router function 142 can select among a Q&A agent 152, a guided conversational agent 152, a system of record (SOR) query agent 152, or a smart actions agent 152. For example, the router function 142 can direct a query identified as a policy question to the Q&A agent 152. For example, the router function 142 can receive an output from the intent detection engine 140 that identifies a query as relating to a company policy, and the router function 142 can select the Q&A agent 152 to process the query and generate a response based on a matching question and answer pair 128. The router function 142 can direct a query identified as a workflow request to the smart actions agent 152. For example, the router function 142 can select the smart actions agent 152 to process a user query that requests initiation of a workflow for requesting time off, and the smart actions agent 152 can guide the user through the workflow steps required to complete the time off request. The router function 142 can update session context to maintain information about ongoing conversations and to enable context switching between different conversational flows. For example, the router function 142 can resume a previous workflow after processing an interjected query from a user.

The data processing system 110 can include agent functions 150. The agent functions 150 can include a collection of functionalities provided by one or more agents 152 for query resolution. The agent functions 150 can include answering questions, guiding conversations, retrieving structured data, or executing workflows, among others. The agent functions 150 can be invoked by the router function 142 based on detected intent and entities. The agent functions 150 can include invoking a guided conversational agent 152 to collect additional information from the user. The agent functions 150 can generate responses 154 to be returned to the client device 102. The agent functions 150 can include returning a pre-verified answer to a policy question using a question and answer agent 152.

The agent functions 150 can include agents 152. The agents 152 can be software components that execute specific actions for query resolution. The agents 152 can include a question and answer agent, a guided conversational agent, a system of record query agent, or a smart actions agent. The agents 152 can generate responses 154 based on the type of query and one or more associated entities. For example, the system of record query agent can retrieve a paid time off balance of a user from structured data. The agents 152 can interact with the knowledge graph 160 and the storage 122 to obtain information required for query resolution. For example, the smart actions agent can use metadata to trigger a workflow for requesting paid time off.

The agent functions 150 can include responses 154. The responses 154 can be output messages generated by the agents 152 and returned to the client device 102. The responses 154 can include answers to questions, workflow confirmations, or follow-up prompts. The responses 154 can be transmitted to the client device 102 via the link 106. A response 154 can provide a direct answer or a reference to a section of a policy document. The responses 154 can be formatted for display in a graphical user interface. For example, the response 154 can be shown in a chat window or a dashboard on the client device 102.

The data processing system 110 can include a knowledge graph 160 with ontologies 130. The knowledge graph 160 can be a structured representation of ontologies 130, entities 132, and relationships 134 for use in query resolution. For example, the knowledge graph 160 can represent connections among policies, benefits, or employee attributes. The knowledge graph 160 can be used by the intent detection engine 140 or the agents 152 to provide context, disambiguation, or workflow generation during query resolution. The knowledge graph 160 can be traversed to clarify ambiguous queries or to identify related entities for follow-up questions. The knowledge graph 160 can be updated as new ontologies 130 are generated or as relationships 134 change. For example, ingestion of a new policy document can result in updates to the knowledge graph 160.

The question and answer pairs can get embedded into a vector store, and the ontologies can get inserted into a knowledge graph. Both the question and answer pairs and the ontologies can be leveraged during runtime when an employee is interacting with the HR processing framework. From an employee perspective, given an incoming user query, the technical solutions can fetch user metadata (e.g., location, client ID, language) and create an embedding of the incoming user query and pass it on to a router that interacts with our intent detection engine to get the accurate intent and guide it to relevant agents.

The intent detection engine 140 can take the embedding of the user query and can do a vector semantic search against the Q&As. The intent detection engine 140 can leverage the knowledge graph for additional context and disambiguation. The technical solutions can leverage, for example, a GraphRAG approach to better detect the user's intent with confidence. Besides an advanced way to detect intents, the technical solutions can provide a disambiguation logic. The disambiguation logic can provide the functionality, such that when a user asks "what is my 401k?", the processing framework can determine that the user may either mean a 401k balance, a 401k policy, or something else related to "401k". This additional context can be extracted from the knowledge graph, via follow up an agent which can utilize the LLM to ask the user specific follow-up questions, such as "did you mean to ask for 401k policy or 401k balance?" Once the router function of the processing framework receives or clarifies the correct intent of the user from the intent detection engine, the router can direct the request to one of the following agents, such as: the Q&A agent, the guided conversational agent, the SOR query agent and the smart action agent. The Q&A agent can be configured to handle various questions and answers (e.g., employee queries) related to company policy documents or otherwise that are stored in a vector store. These questions and answers can be vetted in advance by HR practitioners via the dashboard. These questions can include queries, such as: "what is our 401k policy?" or "when can I bring my pet to office?". In cases where the Q&A agent cannot find a match to user's query from the pre-vetted list of Q&As in our vector store, the Q&A Agent can leverage the knowledge graph as a fallback to find the best possible references that can still help guide the user in the right direction. Apart from helping the user, this also helps eliminate hallucination since the technical solutions don't let LLM generate anything outside of the content stored in the vector store and the knowledge graph.

The guided conversational agent can leverage the domain-specific language metadata to guide a user through a predefined workflow, accepting inputs at different stages, as applicable. For instance, the guided conversation agent can deal with a query, such as: "I'm having a baby, how can I apply for maternity leave?" The guided conversational agent can guide the conversation with follow up questions, to which the responses lead to further discussions, questions, or resolutions.

The system of record (SOR) query agent can include a knowledge graph using function calls to the metadata to fetch accurate responses for questions, such as "what is my 401k balance?", "what is my PTO balance?", and "show me associates with node.js skills in my manager's org". By leveraging graph-based connections between entities such as employees, skills, and financial data, the agent can retrieve relevant information. For instance, it can provide 401k and PTO balances by querying financial and HR nodes or list associates with specific skills within an organizational hierarchy. This structured approach allows for precise, up-to-date responses, improving the handling of complex queries and optimizing internal data management tasks.

The smart actions agent can include triggering the smart-action-service that leverages metadata, and for a given user query with parameters or otherwise, can guide the user to the right page or workflow in the system. For instance, it can deal with "request time off from July 5 to July 10", "show me my last pay statement", "I want to promote Robert", "view my income statement for 2023", etc.

The technical solutions can implement the step of generating and returning the accurate personalized response to the user, and, where applicable, also add a reference to the specific section and document using which the information was generated.

The technical solutions can leverage the local session information to help keep track of the conversation history/context. This helps the solution handle the sudden change in context, for example - user asking "what is my 401k balance?" in the middle of a guide 'maternity leave' conversational flow. The HR assistant can quickly change gears with the help of our intent detection engine to answer that question, and then resume the 'maternity leave' flow.

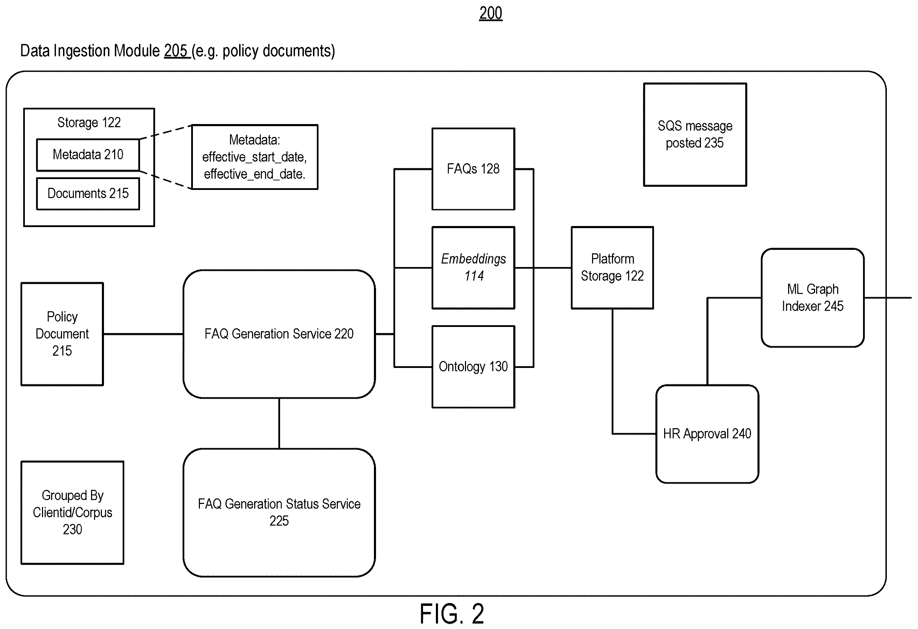

FIGs. 2-4 illustrate an example of a distributed block diagram of a system for implementing the multi-agent processing framework for automated query resolution. FIG. 2 illustrates an example 200 of a data ingestion module 205 that can include a storage 122 (e.g., storage data service) for storing metadata 210 and documents 215 (e.g., policy documents), which can be grouped by ClientID/Corpus 230. Data ingestion module 205 can include FAQ generation service 220 and FAQ generation status service 225 to generate FAQs 128, embeddings 114, and ontologies 130, which can be stored in platform storage 122 along with SQS messages posted 235 and for HR approval 240 and ML graph indexer 245.

Referring now to FIG. 2, illustrated is a block diagram of an example system 200 with a data ingestion module 205 for generating and managing frequently asked questions, embeddings, and ontologies from various documents in a multi-agent processing framework. The system 200 can include a data ingestion module 205, metadata 210, policy documents 215, an FAQ generation service 220, an FAQ generation status service 225, a data grouping service 230, an SQS message service 235, user approval 240, an ML graph indexer 245, storage 122, Q&A pairs 128, embeddings 114, and ontologies 130.

The system 200 can include a data ingestion module 205. The data ingestion module 205 can be a component for obtaining and processing policy documents 215 and metadata 210 for further use in the multi-agent processing framework. The data ingestion module 205 can receive policy documents 215 and metadata 210 from storage 122. The data ingestion module 205 can generate frequently asked questions, embeddings 114, and ontologies 130 from the received policy documents 215 and metadata 210. For example, the data ingestion module 205 can invoke the FAQ generation service 220 to produce Q&A pairs 128 and embeddings 114 from policy documents 215. The data ingestion module 205 can execute a sequence of processing steps that can include grouping policy documents 215 by client or corpus, generating Q&A pairs 128, obtaining approval, and indexing the generated data for downstream use. After generating Q&A pairs 128, the data ingestion module 205 can transmit the generated Q&A pairs 128 for HR approval 240 and for indexing by the ML graph indexer 245.

The data ingestion module 205 can include metadata 210 and policy documents 215. The metadata 210 can be information associated with policy documents 215, such as effective dates or document attributes. For example, metadata 210 may include fields such as effective_start_date or effective_end_date for a given policy document 215. The metadata 210 can be used to provide context for document ingestion, FAQ generation, or ontology creation. For example, the FAQ generation service 220 may use metadata 210 to determine which policies are currently in effect. The metadata 210 may be extracted from storage 122 and associated with each policy document 215 as part of the ingestion process. For example, when a new policy document 215 is ingested, the metadata 210 may be retrieved and stored in association with the policy document 215 for downstream processing. The policy documents 215 can be source documents that include policy, guidelines, or regulatory information relevant to an enterprise. For example, policy documents 215 may include employee handbooks, benefits guides, or compliance manuals. The policy documents 215 can be processed to generate Q&A pairs 128, embeddings 114, or ontologies 130 for use in automated query resolution. For example, the FAQ generation service 220 may extract questions and answers from policy documents 215 to populate the knowledge base 126. The policy documents 215 may be stored in storage 122 and accessed by the data ingestion module 205 as needed. For example, when a new policy document 215 is uploaded, the policy document 215 may be stored and indexed for subsequent FAQ and ontology generation.

The data ingestion module 205 can include an FAQ generation service 220. The FAQ generation service 220 can be a component for generating frequently asked questions and answers from policy documents 215 and associated metadata 210. The FAQ generation service 220 can use natural language processing to extract question and answer pairs 128 from policy documents 215. The FAQ generation service 220 can generate embeddings 114 and ontologies 130 from the extracted question and answer pairs 128 for use in downstream semantic search or knowledge graph construction. For example, the FAQ generation service 220 can generate an embedding 114 for each question, and can create ontologies 130 to represent entities and relationships found in the policy documents 215 or metadata 210. The FAQ generation service 220 can process policy documents 215 in batches or as the policy documents 215 are ingested. The FAQ generation service 220 can interact with other components, such as the FAQ generation status service 225 or platform storage 122. For example, after generating question and answer pairs 128, the FAQ generation service 220 can update the FAQ generation status service 225 and can store the generated question and answer pairs 128, embeddings 114, or ontologies 130 in platform storage 122.

The data ingestion module 205 can include an FAQ generation status service 225. The FAQ generation status service 225 can be a component for tracking the progress or status of FAQ generation operations. The FAQ generation status service 225 can record whether FAQ extraction for a given policy document 215 has completed or is pending approval. The FAQ generation status service 225 can provide status updates to other components, such as the data grouping service 230 or user approval 240. For example, the FAQ generation status service 225 can notify HR personnel when a new set of question and answer pairs 128 is ready for review. The FAQ generation status service 225 can update status records in response to events such as completion of FAQ extraction or approval by HR. For example, once user approval 240 is received, the FAQ generation status service 225 can mark the FAQ set as approved and ready for indexing.

The data ingestion module 205 can include a data grouping service 230. The data grouping service 230 can be configured to group policy documents and related data by client identification or corpus for processing and storage. The data grouping service 230 can organize documents for different business units or clients into separate processing batches. The data grouping service 230 can facilitate targeted frequently asked question generation and ontology construction for each group or corpus. The data grouping service 230 can assign group identifiers and manage associations between documents, metadata, or generated artifacts. For example, a group of policy documents for a particular region can be processed together and linked to the corresponding client identification.

The data ingestion module 205 can include user approval 240. The user approval 240 can be a process or service for obtaining human review and approval of generated question and answer pairs 128, embeddings 114, or ontologies 130 before such artifacts are used in downstream processing. Human resources personnel can review and approve the output of the FAQ generation service 220 prior to indexing. The user approval 240 can act as a quality control checkpoint such that only reviewed and approved artifacts (e.g., documents and metadata) are stored in platform storage 122 and subsequently indexed by the ML graph indexer 245. The user approval 240 can be triggered upon completion of FAQ extraction and can update status records or initiate downstream processing after approval. For example, the FAQ generation status service 225 can update the status to indicate approval and can notify the ML graph indexer 245 to proceed with indexing the approved artifacts.

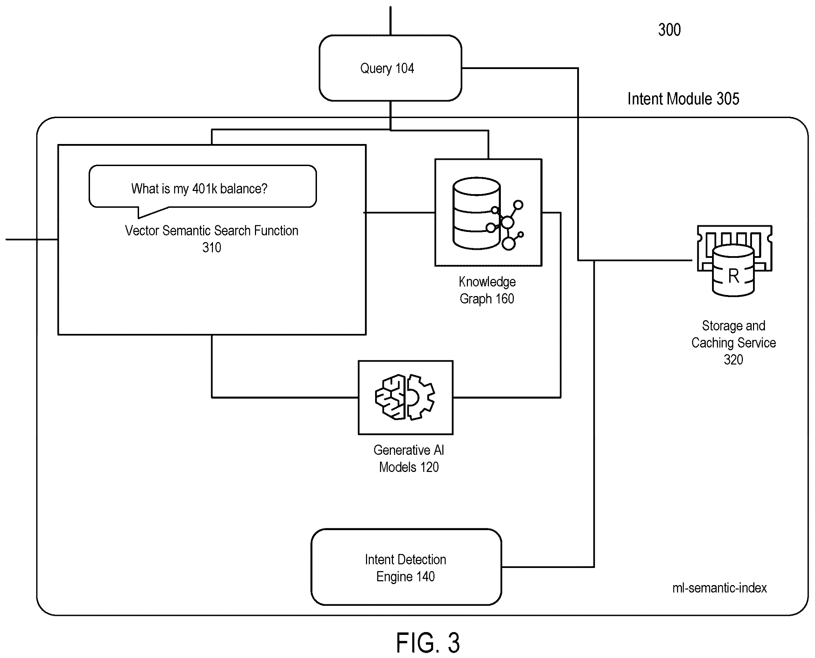

FIG. 3 illustrates an example 300 of an intent module 305 that can receive the generated user inputs (e.g., query 104) and utilize a vector semantic search function 310, knowledge graph 160, and generative AI models 120. Intent module 305 can include intent detection engine 140 and storage and caching service 320 for storing the queries 104 and the corresponding results. For instance, the example 300 of the intent module 305 can receive the generated user inputs (e.g., query 104) and utilize a vector semantic search function 310, knowledge graph 160, and generative AI models 120. The intent module 305 can include intent detection engine 140, and storage and caching service 320 for storing the queries 104 and the corresponding results.

The system 300 can include an intent module 305. The intent module 305 can be a component for receiving and processing user queries for automated query resolution. The intent module 305 can receive a query 104 from a client device for downstream processing. The intent module 305 can execute a sequence of operations that can include performing a semantic search, performing intent detection, or retrieving contextual information from a knowledge graph 160. For example, the intent module 305 can invoke a vector semantic search function 310 or an intent detection engine 140 to determine the intent of the user and one or more relevant entities. The intent module 305 can coordinate the flow of data among the query 104, the vector semantic search function 310, one or more generative AI models 120, the intent detection engine 140, the knowledge graph 160, or a storage and caching service 320. For example, the intent module 305 can transmit the query 104 to the vector semantic search function 310, receive one or more results, or update the storage and caching service 320 with the detected intent.

The intent module 305 can include a vector semantic search function 310. The vector semantic search function 310 can be a component configured to perform a semantic similarity search between an incoming query and stored embeddings. The vector semantic search function 310 can generate, using one or more machine learning models and based on a query associated with an account of a processing framework, an embedding corresponding to a vector representation of the query. The vector semantic search function 310 can perform, using the embedding, a vector semantic search in a vector space of a plurality of queries to identify documentation associated with the query and a matching question response pair, where the vector space is generated using the one or more machine learning models. The vector semantic search function 310 can compute a similarity score between the embedding of a query, such as "What is my 401k balance?", and embeddings of stored question and answer pairs. The vector semantic search function 310 can use a transformer-based model or another machine learning model to generate the embedding and can use a similarity metric, such as cosine similarity, to retrieve a closest question and answer pair from a vector index. The vector semantic search function 310 can obtain embeddings from generative AI models 120 and can retrieve candidate question and answer pairs from storage or a caching service, such as storage and caching service 320. The vector semantic search function 310 can call a generative AI model 120 to produce an embedding and can query the storage and caching service 320 for relevant question and answer pairs.

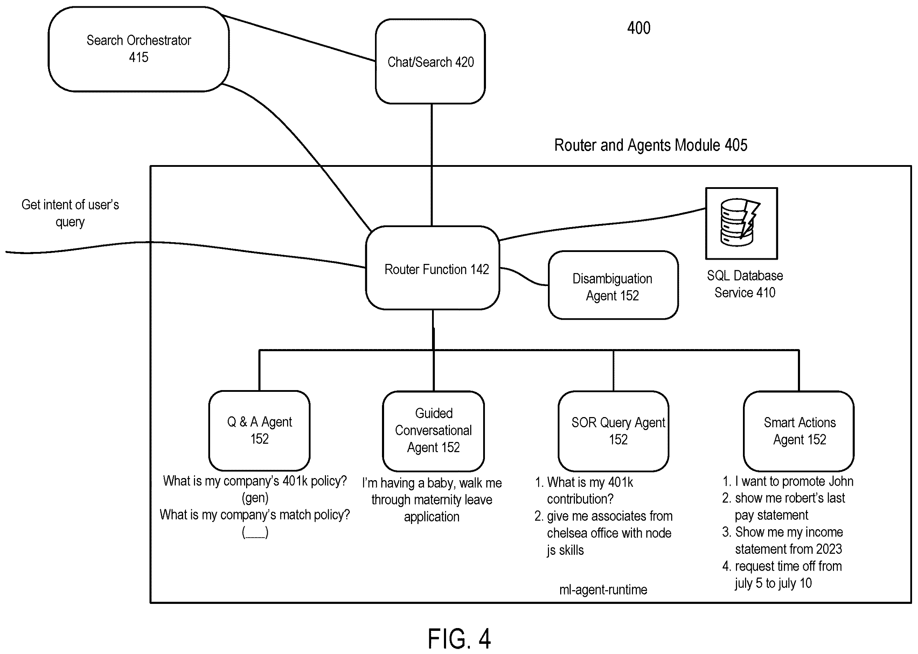

FIG. 4 illustrates an example 400 of a router and agents module 405 that can receive the intent from example system 300 of FIG. 3 and utilize the router function 142 along with various agents (e.g., disambiguation agent 152, Q&A agent 152, guided conversational agent 152, SOR query agent 152, or smart actions agent 152) to generate the response to the query. The router and agents module 405 can include an SQL database service 410 and can include or be communicatively coupled with a chat/search 420 (e.g., a smartbot or UI) and search orchestrator 415 in communication with the router function 142.

The example system 400 can utilize router and agents functionalities for automated query resolution in a multi-agent processing framework. The system 400 can include a router and agents module enclosure 405. The router and agents module enclosure 405 can include a router function 142, a search orchestrator 415, a chat and search function 420, a disambiguation agent 152, a SQL database service 410, and one or more agents 152. The agents 152 can include a Q&A agent 152, a guided conversational agent 152, a SOR query agent 152, and a smart actions agent 152.

The system 400 can include a router and agents module enclosure 405. The router and agents module enclosure 405 can define a logical or physical boundary that groups components associated with agent selection and routing for query resolution. In some implementations, the router and agents module enclosure 405 can represent a software service or a microservice grouping within a distributed system. The router and agents module enclosure 405 can receive the intent of a user query and direct processing to internal components of the system 400. For example, upon receiving a query intent, the router and agents module enclosure 405 can invoke the router function 142 to select an agent 152 for response generation. The router and agents module enclosure 405 can coordinate communication between the router function 142, the agents 152, or supporting services such as the SQL database service 410. The router and agents module enclosure 405 can transmit data between the chat and search function 420 and the selected agent 152 for conversational processing.

The router and agents module enclosure 405 can include a search orchestrator 415. The search orchestrator 415 can be a component for coordinating or sequencing search operations related to query resolution. The search orchestrator 415 can manage the flow of data between the chat and search function 420 and the router function 142. The search orchestrator 415 can transmit search results or user queries to the router function 142 for further processing. For example, the search orchestrator 415 can forward a user query intent to the router function 142 to initiate agent selection. The search orchestrator 415 can receive input from the chat and search function 420 and output to the router function 142. The search orchestrator 415 can aggregate search results and pass the aggregated results to the router function 142 for routing to an appropriate agent 152.

The router and agents module enclosure 405 can include a disambiguation agent 152. The disambiguation agent 152 can be a component for clarifying ambiguous queries by generating follow-up questions or extracting additional context. For example, the disambiguation agent 152 can prompt a user to specify whether a query referencing "401k" refers to a policy or a balance. The disambiguation agent 152 can operate in conjunction with the router function 142 to refine the detected intent before agent selection. In some implementations, if the initial query is ambiguous, the disambiguation agent 152 can generate one or more follow-up questions and can update the intent based on a response received from the user. The disambiguation agent 152 can use outputs from the knowledge graph 160 and the intent detection engine 140 to generate clarifying prompts. For example, the disambiguation agent 152 can access entity relationships in the knowledge graph 160 to determine which follow-up questions to present.

The router and agents module enclosure 405 can include one or more agents 152. The agents 152 can include a question and answer agent 152, a guided conversational agent 152, a system of record query agent 152, or a smart actions agent 152. The question and answer agent 152 can process queries related to company policy documents or other information stored in a vector store. The question and answer agent 152 can use a knowledge graph 160 as a fallback when a suitable match is not identified in the vector store. The guided conversational agent 152 can use domain-specific language metadata to guide a user through a predefined workflow by generating follow-up questions and processing responses at different stages. The system of record query agent 152 can use the knowledge graph 160 and function calls to metadata to retrieve structured data for queries, such as balances or employee skills. The smart actions agent 152 can trigger a smart-action-service to guide a user to a page or workflow in the system, or to implement a guided workflow for actions such as requesting time off or viewing pay statements. The router and agents module enclosure 405 can direct a query to one or more of the agents 152 based on the intent detected by the intent detection engine 140 and the routing logic of the router function 142.

The agents 152 can include a question and answer agent 152, a guided conversational agent 152, a system of record query agent 152, or a smart actions agent 152. The question and answer agent 152 can process queries related to company policy documents or other information stored in a vector store. The question and answer agent 152 can use a knowledge graph 160 as a fallback when a suitable match is not identified in the vector store. The guided conversational agent 152 can use domain-specific language metadata to guide a user through a predefined workflow by generating follow-up questions and processing responses at different stages. For example, the guided conversational agent 152 can present a sequence of prompts to collect information required for a workflow, such as a leave application. The system of record query agent 152 can use the knowledge graph 160 and function calls to metadata to retrieve structured data for queries. The system of record query agent 152 can return information such as account balances or employee skill sets by querying structured data sources. The smart actions agent 152 can trigger a smart-action-service to guide a user to a page or workflow in the system or to implement a guided workflow for actions such as requesting time off or viewing pay statements. For example, the smart actions agent 152 can process a request to initiate a workflow for promoting an employee or generating an income statement.

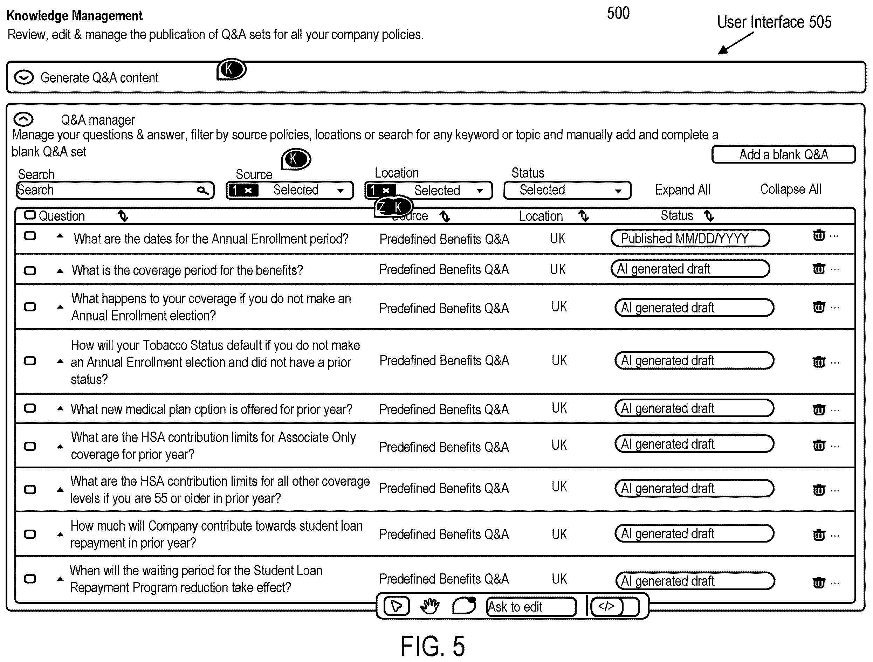

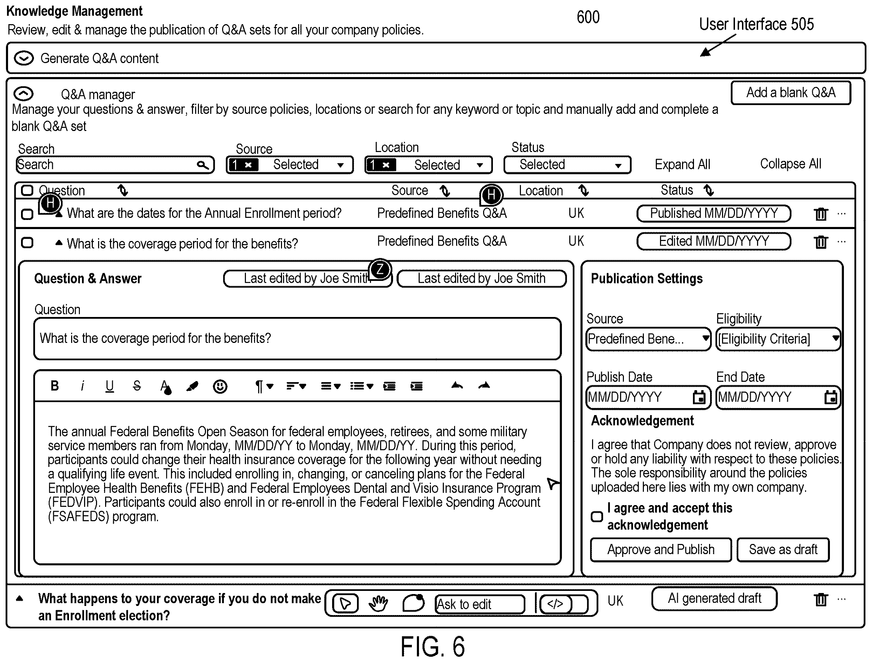

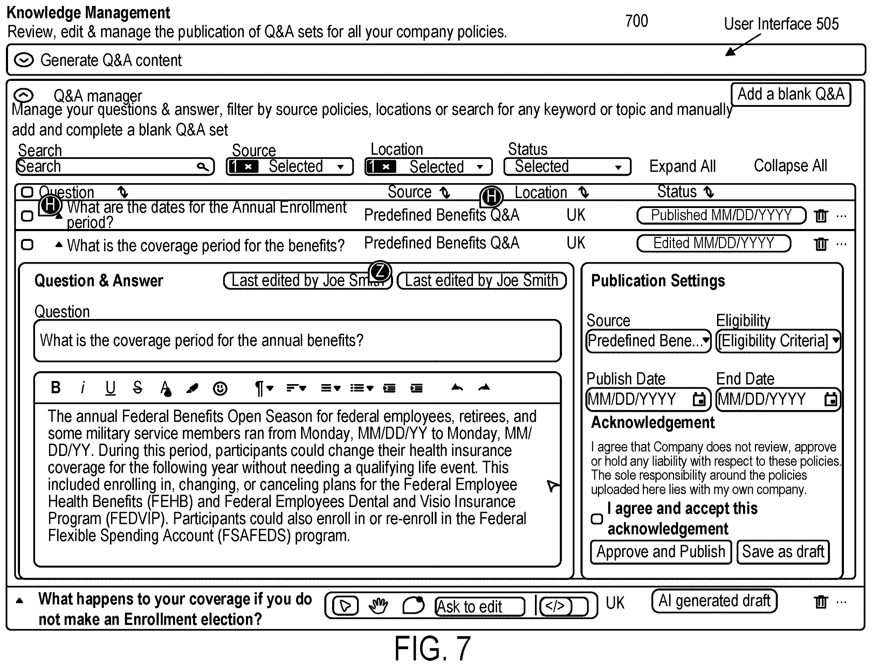

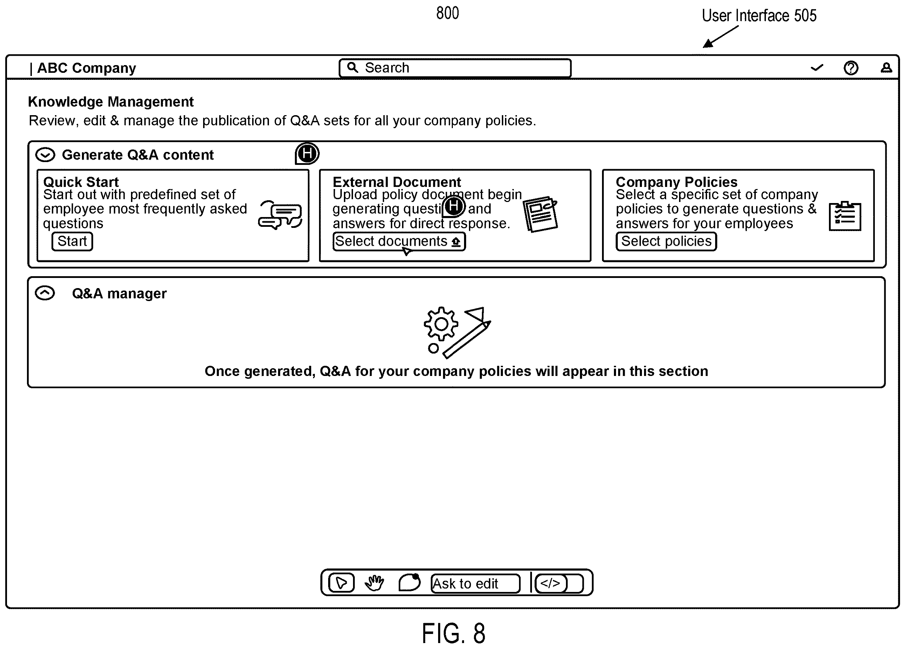

FIGs. 5-8 illustrate examples 500, 600, 700, and 800 of one or more user interfaces corresponding to the knowledge management and Q&A management that can be generated and displayed on a computing device (e.g., client device 102). FIG. 5 illustrates an example 500 of a user interface 505 that can be illustrated or provided to a client device. FIG. 6 illustrates an example 600 of a user interface 505 that can be illustrated or provided to a client device. FIG. 7 illustrates an example 700 of a user interface 505 that can be illustrated or provided to a client device. FIG. 8 illustrates an example 800 of a user interface 505 that can be illustrated or provided to a client device.

Referring now to FIG. 5, illustrated is an example screenshot 500 of a knowledge management window for managing and publishing Q&A sets for company policies. The example screenshot 500 can include a user interface 505. The user interface 505 can be a graphical display presented on a client device for reviewing, editing, or publishing Q&A sets associated with company policies. The user interface 505 can present a dashboard view that can allow a human resources practitioner to generate Q&A content, filter by source or location, or view the publication status of each Q&A pair. The user interface 505 can display controls for generating Q&A content, searching, filtering, or adding blank Q&A sets, and can present a list of Q&A pairs with associated metadata or publication status. The user interface 505 can include a generate Q&A content button, search and filter fields, or a table listing questions, sources, locations, and statuses such as AI generated draft or Published MM/DD/YYYY, and can obtain and display Q&A pairs generated by automated processes or curated by human resources practitioners, and can allow editing, publishing, or deleting Q&A entries, with options to expand or collapse Q&A entries, edit draft responses, or publish finalized Q&A pairs for employee access.

Referring now to FIG. 6, illustrated is an example screenshot 600 of a user interface 505 for managing the publication of Q&A sets for company policies. The example screenshot 600 can include a user interface 505, a help icon H, and a last edited indicator Z. The user interface 505 can include a help icon H. The help icon H can be a graphical element displayed within the user interface 505 to provide contextual assistance or additional information about features or actions. For example, the help icon H may be displayed adjacent to a question or field, and when selected, may display a tooltip or modal with explanatory content. The user interface 505 can also include a last edited indicator Z, which can be a graphical or textual element displayed within the user interface 505 to indicate the most recent editor and timestamp of a Q&A set or entry.

Referring now to FIG. 7, illustrated is an example screenshot 700 of a knowledge management user interface for reviewing, editing, and publishing Q&A sets for company policies within a knowledge management system. The example screenshot 700 can include a user interface 505. The user interface 505 can be a graphical display presented on a client device for reviewing, editing, and publishing Q&A sets associated with company policies. The user interface 505 can present a dashboard view that can allow a human resources practitioner to generate Q&A content, filter by source or location, or view the publication status of each Q&A pair. The user interface 505 can provide controls for generating Q&A content, searching, filtering, or adding blank Q&A sets, and can present a list of Q&A pairs with associated metadata or publication status. The user interface 505 can include a generate Q&A content button, search and filter fields, or a table listing questions, sources, locations, and statuses such as AI generated draft or Published MM/DD/YYYY, and can obtain and display Q&A pairs generated by automated processes or curated by human resources practitioners, and can allow editing, publishing, or deleting Q&A entries, with options to expand or collapse Q&A entries, edit draft responses, or publish finalized Q&A pairs for employee access.

Referring now to FIG. 8, illustrated is an example screenshot 800 of a knowledge management dashboard for reviewing, editing, and managing the publication of Q&A sets for company policies. The example screenshot 800 can include a user interface 505 presenting options for generating Q&A content, such as a quick start feature, external document upload, or company policy selection, and can display a Q&A manager section where generated Q&A for company policies can appear. The user interface 505 can include controls for starting processes, selecting documents, or selecting policies, and can display a message indicating that Q&A for company policies will appear once generated. The user interface 505 can be configured to provide tools for reviewing, editing, and managing the publication status of Q&A sets within the knowledge management dashboard 800.

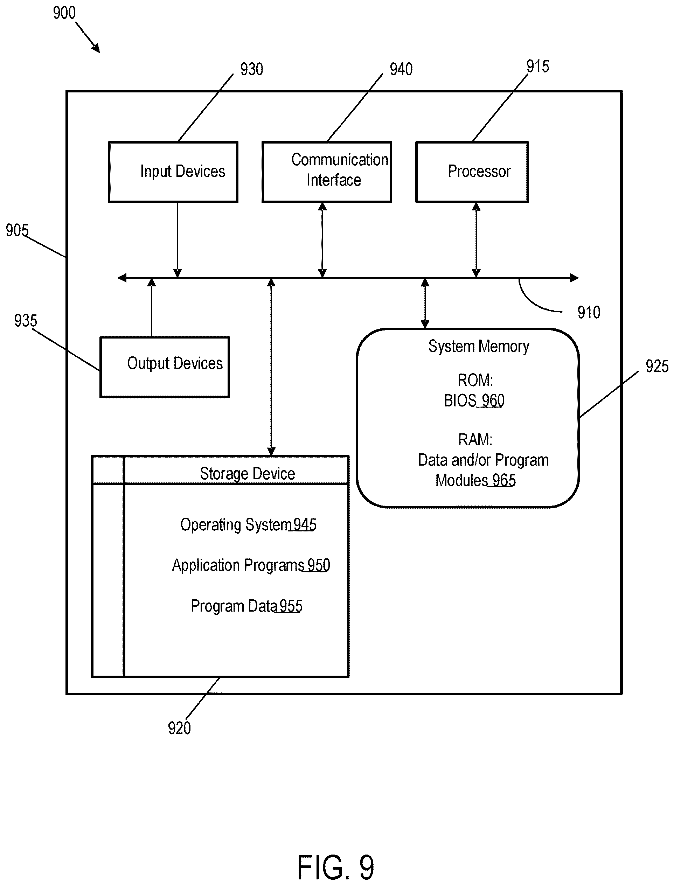

FIG. 9 is an illustrative architecture of a computing system 900 implemented in embodiments of the technical solutions. The computing system 900 is only one example of a suitable computing system and is not intended to suggest any limitation as to the scope of use or functionality of the solutions. Also, computing system 900 should not be interpreted as having any dependency or requirement relating to any one or combination of components illustrated in computing system 900.

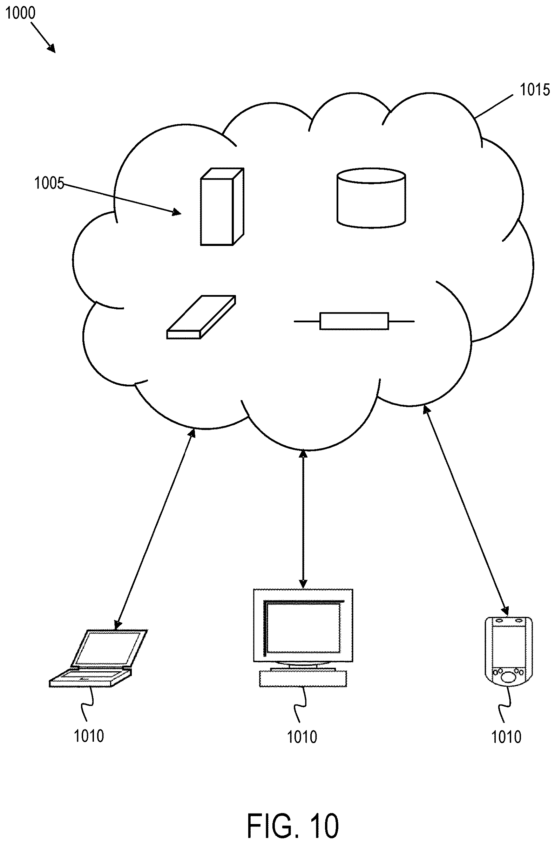

As shown in FIG. 9, computing system 900 includes a computing device 905. The computing device 905 can be resident on a network infrastructure, such as within a cloud environment, as shown in FIG. 10, or may be a separate independent computing device (e.g., a computing device of a third-party service provider). The computing device 905 may include a bus 910, a processor 915, a storage device 920, a system memory (hardware device) 925, one or more input devices 930, one or more output devices 935, and a communication interface 940.

The bus 910 permits communication among the components of computing device 905. For example, bus 910 may be any of several types of bus structures, including a memory bus or memory controller, a peripheral bus, and a local bus using any of a variety of bus architectures to provide one or more wired or wireless communication links or paths for transferring data or power to, from, or between various other components of computing device 905.

The processor 915 may be one or more processors or microprocessors that include any processing circuitry operative to interpret and execute computer readable program instructions, such as program instructions for controlling the operation and performance of one or more of the various other components of computing device 905. In embodiments, processor 915 interprets and executes the processes, steps, functions, or operations of the technical solutions, which may be operatively implemented by the computer readable program instructions. For example, processor 915 can be used to provide any functionality of the data processing system or any of its functionality.

In embodiments, processor 915 may receive input signals from one or more input devices 930 or drive output signals through one or more output devices 935. The input devices 930 may be, for example, a keyboard, touch sensitive user interface (UI). The output devices 935 can be, for example, any display device, speaker, printer, or any other device that can be used to present or provide output.

The storage device 920 may include removable/non-removable, volatile/non-volatile computer readable media, such as, but not limited to, non-transitory media such as magnetic or optical recording media and their corresponding drives. The drives and their associated computer readable media provide for storage of computer readable program instructions, data structures, program modules and other data for operation of computing device 905 in accordance with the different aspects of the technical solutions. In embodiments, storage device 920 may store operating system 945, application programs 950, and program data 955 in accordance with aspects of the technical solutions.

The system memory 925 may include one or more storage mediums, including for example, non-transitory media such as flash memory, permanent memory such as read-only memory ("ROM"), semi-permanent memory such as random-access memory ("RAM"), any other suitable type of storage component, or any combination thereof. In some embodiments, an input/output system 960 (BIOS) including the basic routines that help to transfer information between the various other components of computing device 905, such as during start-up, may be stored in the ROM. Additionally, data or program modules 965, such as at least a portion of operating system 945, application programs 950, or program data 955, that are accessible to or presently being operated on by processor 915 may be contained in the RAM.

The communication interface 940 may include any transceiver-like mechanism (e.g., a network interface, a network adapter, a modem, or combinations thereof) that enables computing device 905 to communicate with remote devices or systems, such as a mobile device or other computing devices such as, for example, a server in a networked environment, e.g., cloud environment. For example, computing device 905 may be connected to remote devices or systems via one or more local area networks (LAN) or one or more wide area networks (WAN) using communication interface 940.

As discussed herein, computing system 900 may be configured to integrate different scanner types into a single workbench or tool. This allows developers and other team members a uniform approach to assessing security vulnerabilities in a code throughout the enterprise. In particular, computing device 905 may perform tasks (e.g., process, steps, methods or functionality) in response to processor 915 executing program instructions contained in a computer readable medium, such as system memory 925. The program instructions may be read into system memory 925 from another computer readable medium, such as data storage device 920, or from another device via the communication interface 940 or server within or outside of a cloud environment. In embodiments, an operator may interact with computing device 905 via the one or more input devices 930 or the one or more output devices 935 to facilitate performance of the tasks or realize the end results of such tasks in accordance with aspects of the technical solutions. In additional or alternative embodiments, hardwired circuitry may be used in place of or in combination with the program instructions to implement the tasks, e.g., steps, methods or functionality, consistent with the different aspects of the technical solutions. Thus, the steps, methods or functionality described herein can be implemented in any combination of hardware circuitry and software.

FIG. 10 shows an example cloud computing environment 1000 in accordance with aspects of the solutions. In embodiments, one or more aspects, functions or processes described herein may be performed or provided via cloud computing environment 1000. As depicted in FIG. 1010, cloud computing environment 1000 includes cloud resources 1005 that are made available to client devices 1010 via a network 1015, such as the Internet. Cloud resources 1005 may be on a single network or a distributed network. Cloud resources 1005 may be distributed across multiple cloud computing systems or individual network enabled computing devices. Cloud resources 1005 can include a variety of hardware or software computing resources, such as servers, databases, storage, networks, applications, and platforms that perform the functions provided herein including storing code, running scanner types and provided an integration of plural scanner types into a uniform and standardized application, e.g., display.

Client devices 1010 may comprise any suitable type of network-enabled computing device, such as servers, desktop computers, laptop computers, handheld computers (e.g., smartphones, tablet computers), set top boxes, and network-enabled hard drives. Cloud resources 1005 are typically provided and maintained by a service provider so that a client does not need to maintain resources on a local client device 1010. In embodiments, cloud resources 1005 may include one or more computing system 900 of FIG. 1 that is specifically adapted to perform one or more of the functions or processes described herein.

Cloud computing environment 1000 may be configured such that cloud resources 1005 provide computing resources to client devices 1010 through a variety of service models, such as Software as a Service (SaaS), Platforms as a service (PaaS), Infrastructure as a Service (IaaS), or any other cloud service models. Cloud resources 1005 may be configured, in some cases, to provide multiple service models to a client device 1010. For example, cloud resources 1005 can provide both SaaS and IaaS to a client device 1010. Cloud resources 1005 may be configured, in some cases, to provide different service models to different client devices 1010. For example, cloud resources 1005 can provide SaaS to a first client device 1010 and PaaS to a second client device 1010.

Cloud computing environment 1000 may be configured such that cloud resources 1005 provide computing resources to client devices 1010 through a variety of deployment models, such as public, private, community, hybrid, or any other cloud deployment model. Cloud resources 1005 may be configured, in some cases, to support multiple deployment models. For example, cloud resources 1005 can provide one set of computing resources through a public deployment model and another set of computing resources through a private deployment model.

In embodiments, software or hardware that performs one or more of the aspects, functions or processes described herein may be accessed or utilized by a client (e.g., an enterprise or an end user) as one or more of a SaaS, PaaS and IaaS model in one or more of a private, community, public, and hybrid cloud. Moreover, although this application includes a description of cloud computing, the systems and methods described herein are not limited to cloud computing and instead can be implemented on any suitable computing environment.

Cloud resources 1005 may be configured to provide a variety of functionality that involves user interaction. Accordingly, a user interface (UI) can be provided for communicating with cloud resources 1005 or performing tasks associated with cloud resources 1005. The UI can be accessed via a client device 1010 in communication with cloud resources 1005. The UI can be configured to operate in a variety of client modes, including a fat client mode, a thin client mode, or a hybrid client mode, depending on the storage and processing capabilities of cloud resources 1005 or client device 1010. Therefore, a UI can be implemented as a standalone application operating at the client device in some embodiments. In other embodiments, a web browser-based portal can be used to provide the UI. Any other configuration to access cloud resources 1005 can also be used in various implementations.

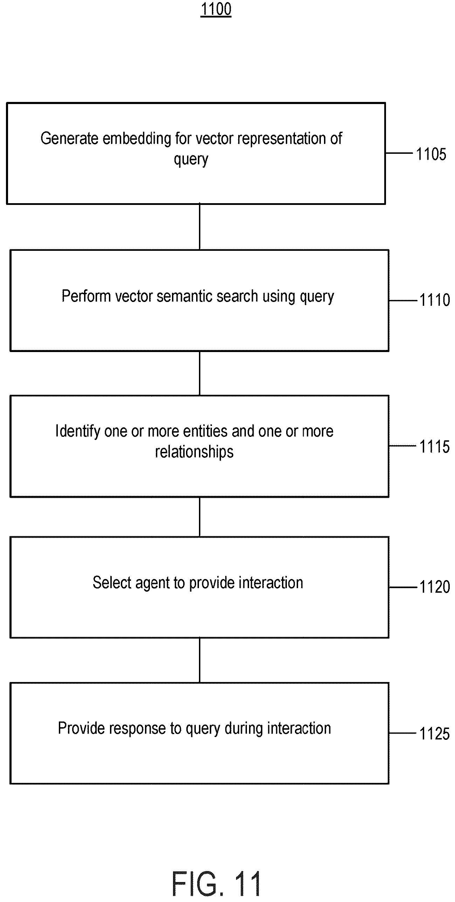

Referring now to FIG. 11, illustrated is a flow chart of an example method 1100 for automated query resolution using a multi-agent processing framework. The method 1100 can be executed, performed, or otherwise carried out by any of the computing systems or devices described herein. For instance, the method can be implemented using instructions stored in a non-transitory computer readable medium to cause the one or more processors to implement the operations or actions of the method. In brief overview of the method 1100, the method 1100 can include generating an embedding for vector representation of a query (1105), performing a vector semantic search using the query (1110), identifying one or more entities and one or more relationships (1115), selecting an agent to provide interaction (1120), and providing a response to the query during the interaction (1125).

The method 1100 can include generating an embedding for vector representation of a query (1105). For instance, one or more processors coupled with memory can generate, using one or more machine learning (ML) models and based on a query associated with an account of a processing framework, an embedding corresponding to a vector representation of the query. The query can be associated with an account of a user associated with an entity (e.g., a corporation or an organization) whose documentation can be utilized to provide responses to user queries. The one or more processors can use a machine learning model, such as a large language model or a transformer model, to convert the text of the query into a numerical vector that encodes semantic or contextual information. The embedding can be generated by applying a pre-trained machine learning model to a query such as a request for a retirement account balance or a request to apply for parental leave, resulting in a high-dimensional vector that can be used for downstream processing. The embedding can be stored in memory or passed to other components of the processing framework for subsequent operations, such as vector semantic search or intent detection.

The data processing system can generate an embedding corresponding to a vector representation of a query using one or more machine learning models. The data processing system can receive a query from a client device. The data processing system can apply a pre-trained machine learning model to the query. The machine learning model can convert the query into a vector representation that encodes semantic or contextual information. The machine learning model can include a transformer-based language model or a large language model. The embedding generated by the machine learning model can be a high-dimensional vector, such as a vector comprising multiple dimensions pertaining to the vector content and associated client account metadata. For example, the embedding can include a vector of real numbers that encodes semantic or contextual information derived from the query associated with the account of the processing framework. The data processing system can generate the embedding immediately upon receipt of the query and prior to any further processing. The embedding can be stored in memory or provided to other components of the data processing system, such as the vector space or the intent detection engine, for subsequent operations. The embedding can be used as an input to a vector semantic search or as a feature for intent classification.

The method 1100 can include performing a vector semantic search using the query (1110). For instance, the method can include performing, by the one or more processors using the embedding, a vector semantic search in a vector space of a plurality of queries and a plurality of question response pairs corresponding to a set of documentation and a validation status to identify documentation associated with the query and a matching question response pair. The vector space can be generated using the one or more ML models. For instance, the one or more processors can calculate a similarity score between the embedding of the query and each candidate embedding in the vector space to determine a set of candidate question response pairs. The one or more processors can compare the similarity score to a predetermined or dynamically calculated threshold to select the matching question response pair. The one or more processors can retrieve a plurality of candidate question response pairs and rank the candidates based on the similarity scores. The one or more processors can store the results of the vector semantic search in memory or in a storage component for subsequent processing by other components of the processing framework.

The one or more processors can identify a matching question response pair by performing a vector semantic search between an embedding generated for a received query and a vector associated with a question of a candidate question response pair. The one or more processors can determine whether a similarity score between the embedding and the vector of the candidate question response pair satisfies a similarity threshold. The one or more processors can identify, based on the vector semantic search, a plurality of question response pairs corresponding to the embedding. The one or more processors can use a knowledge graph to identify one or more entities associated with the plurality of question response pairs. The one or more processors can generate one or more follow up questions based on the identified entities to distinguish among the plurality of question response pairs. The one or more processors can receive one or more responses to the follow up questions and, based on the received responses and the knowledge graph, can select the matching question response pair from the plurality of candidate question response pairs.

Performing a vector semantic search using the query can include comparing the embedding generated for the query to a vector space of a plurality of queries and question response pairs. The method can include identifying documentation associated with the query and a matching question response pair based on the comparison. The method can include using the embedding to search a vector index of stored question and answer pairs to retrieve an entry that is semantically similar to the query. The method can be performed after the embedding has been generated and prior to identifying one or more entities and one or more relationships. For example, once the system has generated the vector representation of the query, the system can immediately perform the semantic search to narrow down candidate responses. The method can include calculating similarity scores between the embedding of the query and embeddings of stored questions, and retrieving those question response pairs that satisfy a similarity threshold. The method can include using cosine similarity to compare the query vector to stored vectors and selecting one or more top matches for further processing.

The method 1100 can include identifying one or more entities and one or more relationships (1115). For instance, the method can include identifying, by the one or more processors, from a knowledge graph comprising entity and relationship data curated from the set of documentation according to the validation status using the one or more ML models, using the documentation and metadata associated with the account, one or more entities related to the question response pair and one or more relationships between the one or more entities. The knowledge graph can define relationships between entities associated with the queries and responses associated with the queries. The one or more processors can extract an entity such as an employee identifier, a benefit type, or a policy reference from the knowledge graph using the metadata associated with the account. The one or more processors can traverse the knowledge graph to determine that a relationship exists between an employee identifier and a specific benefit type, or between a policy reference and an eligibility criterion. For example, the one or more processors can identify that a query response pair referencing a leave policy is related to entities representing an employee and a leave type, and that a relationship exists indicating the applicability of the leave policy to the employee based on the metadata.

The method can include validating or curating the entity and relationship data of the knowledge graph. For example, the method can include the one or more processors comparing extracted entities and relationships against content of entity documentation or policy sources to confirm accuracy before inclusion in the knowledge graph. For instance, automated validation routines can include similarity search (e.g., cosine similarity or Euclidean method) to identify similarity between entities and relationships in the knowledge graph and content of the verified, validated or curated documents for the entity (e.g., most recently updated versions of documents). The method can include the one or more processors flagging or identifying inconsistencies or missing relationships and provide update proposals for review by users, providing prompts to subject matter experts, who may approve, modify, or reject proposed updates to the entities or relationships. The method can also implement periodic audits, where entities and relationships are cross-checked with updated policy documents or metadata to ensure ongoing alignment with current enterprise requirements. The method can support user-driven curation workflows, allowing authorized personnel to manually edit, annotate, or supplement the knowledge graph based on organizational changes, regulatory updates, or feedback from query resolution outcomes.

For instance, the one or more processors can determine, based on at least one of an embedding generated for a received query or one or more entities identified in a knowledge graph, that the query is ambiguous. The one or more processors can generate, via a selected agent, one or more follow-up questions to a client device in response to the determination that the query is ambiguous. The one or more processors can receive, via the selected agent, one or more follow-up responses to the one or more follow-up questions. The one or more processors can identify, based on the one or more follow-up responses and using the knowledge graph, a refined matching question response pair from a plurality of question response pairs. For example, the one or more processors can generate a follow-up question such as "did you mean to ask for 401k policy or 401k balance?" in response to a query of "what is my 401k?". The one or more processors can receive a response from the client device indicating "401k balance" and, using the knowledge graph, can select a question response pair corresponding to a balance inquiry rather than a policy inquiry. For example, the one or more processors can generate multiple follow-up questions to further clarify ambiguous queries, such as distinguishing between different types of leave in response to a query of "how do I apply for leave?". The one or more processors can use the responses to the follow-up questions, in combination with entity and relationship information from the knowledge graph, to select a refined matching question response pair from among several candidate pairs.

Identifying one or more entities and one or more relationships can include extracting relevant entities and relationships from the knowledge graph using the documentation and metadata associated with the account. The one or more processors can, after performing a vector semantic search and prior to agent selection, use the results of the semantic search to determine which entities and relationships are relevant to the query. For example, the one or more processors can determine that a query about "401k" involves entities such as employee, benefit, or balance, and relationships such as has or applies to. Once a matching question and answer pair is identified, the one or more processors can use the knowledge graph to extract additional context for disambiguation or workflow selection. The one or more processors can use one or more machine learning models and the knowledge graph to perform entity and relationship extraction, mapping the query and matched documentation to structured knowledge. In some implementations, the one or more processors can apply natural language processing to the matched question and answer pair and associated documents, then traverse the knowledge graph to identify all relevant entities and how the entities are connected.

The method 1100 can include selecting an agent to provide interaction (1120). The method can include selecting, by the one or more processors, from a plurality of agents of the processing framework, based on the one or more entities and the one or more relations, an agent to provide an interaction with a client device to address the one or more entities and the one or more relationships for the question response pair. For instance, the one or more processors can receive outputs from an intent detection engine and a knowledge graph, where the outputs identify the entities and relationships relevant to the query. The one or more processors can use a router function to determine which agent among the plurality of agents is to be selected for processing the query. The plurality of agents can include a question and answer agent, a guided conversational agent, a system of record query agent, or a smart actions agent, among others. The selection of the agent can be based on the context provided by the identified entities and relationships, such that the agent is configured to address the specific requirements of the question response pair.

The one or more processors can select, from the plurality of agents, a question and answer agent configured to process queries received from a client device based on a matched question response pair. The one or more processors can determine, by the question and answer agent, that the matched question response pair does not satisfy a similarity threshold in a vector space. In response to determining that the matched question response pair does not satisfy the similarity threshold, the one or more processors can provide, from the knowledge graph using metadata, alternative relevant information or one or more policy documents.

The one or more processors can select, from the plurality of agents, a system of record (SOR) query agent configured to access a knowledge graph with function calls to metadata to retrieve structured data corresponding to one or more entities. The one or more processors can generate, using the SOR query agent, the response of queries based on the structured data. The structured data can include confidential information associated with the account or confidential information associated with an enterprise corresponding to the account. For instance, the one or more processors can receive a query from a client device 102 requesting a current 401k balance. The one or more processors can select the SOR query agent to process the query. The SOR query agent can access the knowledge graph 160 and perform a function call to retrieve metadata associated with the user account. The SOR query agent can retrieve the structured data representing the 401k balance from a secure data store. The one or more processors can generate a response including the retrieved 401k balance and provide the response to the client device 102. For example, the one or more processors can receive a query requesting a list of associates with a specified skill set in a particular department. The SOR query agent can access the knowledge graph 160, identify the relevant entities representing the department and skill set, and perform function calls to retrieve structured data listing the associates. The one or more processors can generate a response including the list of associates and provide the response to the client device 102. For example, the structured data can include payroll information, benefits data, or other confidential enterprise records. The SOR query agent can retrieve the requested structured data and generate a response based on the retrieved information.

Selecting an agent to provide interaction can include receiving, by the router function, the entities and relationships identified from the knowledge graph. The router function can apply routing logic to select an agent 152 from a plurality of agents of the agent functions based on the identified entities and relationships. The router function can use one or more rules or machine learning models to match the context of the query to the respective capabilities of the available agents. For example, the router function can select the question and answer agent when the entities and relationships correspond to a direct information request regarding a company policy. The router function can select the guided conversational agent when the entities and relationships indicate a workflow process that requires sequential user input. The router function can select the question and answer agent when the identified entities and relationships correspond to a direct information request. The router function can select the guided conversational agent when the identified entities and relationships correspond to a workflow or require follow-up questions. The router function can select the system of record query agent when the identified entities and relationships correspond to a request for structured data retrieval. The router function can initiate the process of the selected agent to provide an interaction with the user to address the identified entities and relationships for the question response pair.

The method 1100 can include providing a response to the query during the interaction (1125). The method can include providing, by the one or more processors, via the processing framework to the client device, a response to the query based on the question response pair, responsive to the interaction. For example, the one or more processors can generate a response by selecting an answer from a pre-verified question and answer pair stored in a knowledge base, and can transmit the response to the client device for presentation in a graphical user interface. The one or more processors can generate a response by retrieving structured data associated with the account from storage, formatting the structured data as a response, and providing the response to the client device. The one or more processors can generate a response by invoking an agent, such as a guided conversational agent, to present a follow-up question to the client device, receive a user response, and generate a contextually relevant answer based on the received information. For example, the system can generate a response by referencing a section of documentation from the set of documentation used to generate the matching question response pair, and can provide a citation to the client device along with the response. The one or more processors can generate a response by executing a workflow using a smart actions agent, and can provide a confirmation or status update to the client device as the response.

The method can include providing, via the processing framework to the client device, a response to the query response pair that includes the refined matching question response pair. The one or more processors can receive, via an agent of the plurality of agents, one or more follow up responses to one or more follow up questions. The one or more processors can identify, from the plurality of question response pairs and based on the one or more follow up responses, the matching question response pair. For instance, providing a response to the query during the interaction can involve delivering a response of the query response pair to the user via the processing framework, responsive to the interaction with the selected agent. The selected agent can generate a response based on the processing of the query using the identified entities and relationships. The selected agent can present an answer, initiate a workflow, or retrieve structured data and provide the structured data as a response to the client device. The processing framework can transmit the response to the client device for display in a user interface after the selected agent has completed processing the query. The response can be generated by the selected agent using a matched question and answer pair, context from the knowledge graph, or structured data identified in response to the query. The question and answer agent can return a pre-verified answer. The guided conversational agent can present one or more follow-up prompts to the user. The system of record query agent can return account-specific balances or other structured data responsive to the query.

The foregoing examples have been provided merely for the purpose of explanation and are in no way to be construed as limiting of the technical solutions. While aspects of the present application have been described with reference to an exemplary embodiment, it is understood that the words which have been used herein are words of description and illustration, rather than words of limitation. Changes may be made, within the purview of the appended claims, as presently stated and as amended, without departing from the scope and spirit of the present application in its aspects. Although aspects of the present application have been described herein with reference to particular means, materials and embodiments, the present application is not intended to be limited to the particulars described herein; rather, the present application extends to all functionally equivalent structures, methods and uses, such as are within the scope of the appended claims.

The systems described above can provide multiple ones of any or each of those components and these components can be provided on either a standalone system or on multiple instantiation in a distributed system. In addition, the systems and methods described above can be provided as one or more computer-readable programs or executable instructions embodied on or in one or more articles of manufacture. The article of manufacture can be cloud storage, a hard disk, a CD-ROM, a flash memory card, a PROM, a RAM, a ROM, or a magnetic tape. In general, the computer-readable programs can be implemented in any programming language, such as LISP, PERL, C, C++, C#, PROLOG, or in any byte code language such as JAVA. The software programs or executable instructions can be stored on or in one or more articles of manufacture as object code.

The subject matter and the operations described in this specification can be implemented in digital electronic circuitry, or in computer software, firmware, or hardware, including the structures described in this specification and their structural equivalents, or in combinations of one or more of them. The subject matter described in this specification can be implemented as one or more computer programs, e.g., one or more circuits of computer program instructions, encoded on one or more computer storage media for execution by, or to control the operation of, data processing apparatuses. Alternatively or in addition, the program instructions can be encoded on an artificially generated propagated signal, e.g., a machine-generated electrical, optical, or electromagnetic signal that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. While a computer storage medium is not a propagated signal, a computer storage medium can be a source or destination of computer program instructions encoded in an artificially generated propagated signal. The computer storage medium can also be, or be included in, one or more separate components or media (e.g., multiple CDs, disks, or other storage devices include cloud storage). The operations described in this specification can be implemented as operations performed by a data processing apparatus on data stored on one or more computer-readable storage devices or received from other sources.

The terms "computing device", "component" or "data processing apparatus" or the like encompass various apparatuses, devices, and machines for processing data, including by way of example a programmable processor, a computer, a system on a chip, or multiple ones, or combinations of the foregoing. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, app, script, or code) can be written in any form of programming language, including compiled or interpreted languages, declarative or procedural languages, and can be deployed in any form, including as a stand-alone program or as a module, component, subroutine, object, or other unit suitable for use in a computing environment. A computer program can correspond to a file in a file system. A computer program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatuses can also be implemented as, special purpose logic circuitry, e.g., an FPGA (field programmable gate array) or an ASIC (application specific integrated circuit). Devices suitable for storing computer program instructions and data can include non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

The subject matter described herein can be implemented in a computing system that includes a back end component, e.g., as a data server, or that includes a middleware component, e.g., an application server, or that includes a front end component, e.g., a client computer having a graphical user interface or a web browser through which a user can interact with an implementation of the subject matter described in this specification, or a combination of one or more such back end, middleware, or front end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

While operations are depicted in the drawings in a particular order, such operations are not required to be performed in the particular order shown or in sequential order, and all illustrated operations are not required to be performed. Actions described herein can be performed in a different order.

Having now described some illustrative implementations, it is apparent that the foregoing is illustrative and not limiting, having been presented by way of example. In particular, although many of the examples presented herein involve specific combinations of method acts or system elements, those acts and those elements may be combined in other ways to accomplish the same objectives. Acts, elements and features discussed in connection with one implementation are not intended to be excluded from a similar role in other implementations or implementations.

The phraseology and terminology used herein is for the purpose of description and should not be regarded as limiting. The use of "including" "comprising" "having" "containing" "involving" "characterized by" "characterized in that" and variations thereof herein, is meant to encompass the items listed thereafter, equivalents thereof, and additional items, as well as alternate implementations consisting of the items listed thereafter exclusively. In one implementation, the systems and methods described herein consist of one, each combination of more than one, or all of the described elements, acts, or components.

Any references to implementations or elements or acts of the systems and methods herein referred to in the singular may also embrace implementations including a plurality of these elements, and any references in plural to any implementation or element or act herein may also embrace implementations including only a single element. References in the singular or plural form are not intended to limit the presently described systems or methods, their components, acts, or elements to single or plural configurations. References to any act or element being based on any information, act or element may include implementations where the act or element is based at least in part on any information, act, or element.

Any implementation described herein may be combined with any other implementation or embodiment, and references to "an implementation," "some implementations," "one implementation" or the like are not necessarily mutually exclusive and are intended to indicate that a particular feature, structure, or characteristic described in connection with the implementation may be included in at least one implementation or embodiment. Such terms as used herein are not necessarily all referring to the same implementation. Any implementation may be combined with any other implementation, inclusively or exclusively, in any manner consistent with the aspects and implementations described herein.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B‴ can include only 'A', only 'B', as well as both 'A' and 'B'. Such references used in conjunction with "comprising" or other open terminology can include additional items.

Where technical features in the drawings, detailed description or any claim are followed by reference signs, the reference signs have been included to increase the intelligibility of the drawings, detailed description, and claims. Accordingly, neither the reference signs nor their absence have any limiting effect on the scope of any claim elements.

Modifications of described elements and acts such as substitutions, changes and omissions can be made in the design, operating conditions and arrangement of the described elements and operations without departing from the scope of the present application.

References to "approximately," "substantially" or other terms of degree include variations of +/-10% from the given measurement, unit, or range unless explicitly indicated otherwise. Coupled elements can be electrically, mechanically, or physically coupled with one another directly or with intervening elements. Scope of the systems and methods described herein is thus indicated by the appended claims, rather than the foregoing description, and changes that come within the meaning and range of equivalency of the claims are embraced therein.

## Claims

1. A system, comprising:
one or more processors coupled with memory to:
generate, using one or more machine learning (ML) models and based on a query associated with an account of a processing framework, an embedding corresponding to a vector representation of the query;
perform, using the embedding, a vector semantic search in a vector space of a plurality of queries and a plurality of question response pairs corresponding to a set of documentation and a validation status to identify documentation associated with the query and a matching question response pair, the vector space generated using the one or more ML models;
identify, from a knowledge graph comprising entity and relationship data curated from the set of documentation according to the validation status using the one or more ML models, using the documentation and metadata associated with the account, one or more entities related to the question response pair and one or more relationships between the one or more entities, wherein the knowledge graph defines relationships between entities associated with the queries and responses associated with the queries;
select, from a plurality of agents of the processing framework, based on the one or more entities and the one or more relations, an agent to provide an interaction with a client device to address the one or more entities and the one or more relationships for the question response pair; and
provide, via the processing framework to the client device, a response associated with the query based on the question response pair, responsive to the interaction.

2. The system of claim 1, wherein the one or more processors further:
determine, based on at least one of the embedding or the one or more entities identified in the knowledge graph, that the query is ambiguous;
generate, via the selected agent, one or more follow-up questions to the client device in response to the determination that the query is ambiguous;
receive, via the selected agent, one or more follow-up responses to the one or more follow-up questions;
identify, based on the one or more follow-up responses and using the knowledge graph, a refined matching question response pair from the plurality of question response pairs; and provide, to the client device via the processing framework, the response to the query response pair comprising the refined matching question response pair; and/or
the one or more processors are configured to identify the matching question response pair based on a vector semantic search between the embedding and a vector of a question of the matching question response pair satisfying a similarity threshold.

3. The system of claim 1 or 2, wherein the one or more processors are configured to:
identify, based on the vector semantic search, a plurality of question response pairs corresponding to the embedding;
identify, using the knowledge graph, the one or more entities corresponding to one or more follow up questions to distinguish between the plurality of question response pairs;
receive, via an agent of the plurality of agents, one or more follow up responses to the one or more follow up questions; and
identify, from the plurality of question response pairs based on the one or more follow up responses, the matching question response pair.

4. The system of any preceding claim, wherein the one or more processors are configured to:
select, from the plurality of agents, a question and answer agent configured to process queries related based on the matched question response pair;
determine, by the question and answer agent that the matched question response pair does not satisfy a similarity threshold in the vector space; and
provide, in response to the determination, using the knowledge graph, a second matching question response pair; and/or
wherein the one or more processors are configured to:
select, from the plurality of agents, a guided conversational agent configured to generate one or more follow up questions based on the one or more entities;
receive, via the guided conversational agent, responsive to the one or more follow up questions, one or more responses define the one or more entities; and
provide, the response, responsive to the one or more responses.

5. The system of any preceding claim, wherein the one or more processors are configured to:
select, from the plurality of agents, a system of record (SOR) query agent configured to access a knowledge graph with function calls to metadata to retrieve structured data corresponding to the one or more entities;
generate, using the SOR query agent, the response of queries based on the structured data; and optionally wherein
the structured data comprises one or more of confidential information of associated with the account or confidential information associated with an enterprise corresponding to the account.

6. The system of any preceding claim, wherein the one or more processors are configured to:
select, from the plurality of agents, a smart actions agent configured to identify a guided workflow of actions corresponding to the one or more entities;
implement one or more actions of the guided workflow to identify information to resolve the one or more entities; and
provide the response based on the information.

7. The system of any preceding claim, wherein the one or more processors further:
determine a plurality of similarity scores between the embedding and a plurality of candidate question embeddings;
calculate a relative similarity threshold based on a distribution of the similarity scores; and
identify the matching question response pair by comparing the similarity scores to the relative similarity threshold.

8. The system of any preceding claim, wherein the one or more processors further:
identify a workflow of one or more queries comprising the query;
detect a change in query context based on a second query;
identify, in response to detecting the change in the query context, a second agent of the plurality of agents for the second query; and
resume, upon completion of processing of the second query by the second agent, the workflow.

9. The system of any preceding claim, wherein the one or more processors further reference, in the response provided to the client device, a citation to a section of a document from the set of documentation used to generate the matching question response pair.

10. A method, comprising:
generating, by one or more processors coupled with memory, using one or more machine learning (ML) models and based on a query associated with an account of a processing framework, an embedding corresponding to a vector representation of the query;
performing, by the one or more processors, using the embedding, a vector semantic search in a vector space of a plurality of queries and a plurality of question response pairs corresponding to a set of documentation and a validation status to identify documentation associated with the query and a matching question response pair, the vector space generated using the one or more ML models;
identifying, by the one or more processors, from a knowledge graph comprising entity and relationship data curated from the set of documentation according to the validation status using the one or more ML models, using the documentation and metadata associated with the account, one or more entities related to the question response pair and one or more relationships between the one or more entities, wherein the knowledge graph defines relationships between entities associated with the queries and responses associated with the queries;
selecting, by the one or more processors, from a plurality of agents of the processing framework, based on the one or more entities and the one or more relations, an agent to provide an interaction with a client device to address the one or more entities and the one or more relationships for the question response pair; and
providing, by the one or more processors, via the processing framework to the client device, a response of the query based on the question response pair, responsive to the interaction.

11. The method of claim 10, comprising:
determining, by the one or more processors, based on at least one of the embedding or the one or more entities identified in the knowledge graph, that the query is ambiguous;
generating, by the one or more processors, via the selected agent, one or more follow-up questions to the client device in response to the determination that the query is ambiguous;
receiving, by the one or more processors, via the selected agent, one or more follow-up responses to the one or more follow-up questions;
identifying, by the one or more processors, based on the one or more follow-up responses and using the knowledge graph, a refined matching question response pair from the plurality of question response pairs; and
providing, by the one or more processors, to the client device via the processing framework, the response to the query response pair comprising the refined matching question response pair; and/or
the method comprising:
identifying, by the one or more processors, the matching question response pair based on a vector semantic search between the embedding and a vector of a question of the matching question response pair satisfying a similarity threshold.

12. The method of claim 10 or 11, comprising:
identifying, by the one or more processors, based on the vector semantic search, a plurality of question response pairs corresponding to the embedding;
identifying, by the one or more processors, using the knowledge graph, the one or more entities corresponding to one or more follow up questions to distinguish between the plurality of question response pairs;
receiving, by the one or more processors, via an agent of the plurality of agents, one or more follow up responses to the one or more follow up questions; and
identifying, by the one or more processors, from the plurality of question response pairs based on the one or more follow up responses, the matching question response pair.

13. The method of any of claims 10 to 12, comprising:
selecting, by the one or more processors, from the plurality of agents, a question and answer agent configured to process client device queries related based on the matched question response pair;
determining, by the one or more processors, by the question and answer agent that the matched question response pair does not satisfy a similarity threshold in the vector space; and
providing, by the one or more processors, in response to determining that the matched question response pair does not satisfy the similarity threshold, using the knowledge graph, a second matching question response pair; and/or
the method comprising:
selecting, by the one or more processors, from the plurality of agents, a guided conversational agent configured to generate one or more follow up questions based on the one or more entities;
receiving, by the one or more processors, via the guided conversational agent, responsive to the one or more follow up questions, one or more responses define the one or more entities; and
providing, by the one or more processors, the response, responsive to the one or more responses.

14. The method of any of claims 10 to 13, comprising:
selecting, by the one or more processors, from the plurality of agents, a system of record (SOR) query agent configured to access a knowledge graph with function calls to metadata to retrieve structured data corresponding to the one or more entities;
generating, by the one or more processors, using the SOR query agent, the response of queries based on the structured data, wherein the structured data comprises one or more of confidential information of associated with the account or confidential information associated with an enterprise corresponding to the account.

15. A non-transitory computer readable medium storing program instructions for causing at least one processor to carry out the method of any of claims 10 to 14.
